# EUROPEAN PATENT APPLICATION

(11) **EP 4 726 496 A1**
(43) Date of publication of application: **15.04.2026**
(21) Application number: 24843283.3
(22) Date of filing: 24.05.2024
(51) Int. Cl.: G06F 1/16, G06F 3/14

(54) **ELECTRONIC DEVICE AND METHOD FOR DISPLAYING ROTATED SCREEN, AND NON-TRANSITORY COMPUTER-READABLE RECORDING MEDIUM**

(30) Priority: 19.07.2023 KR 20230094195; 20.11.2023 KR 20230161499
(71) Applicant: Samsung Electronics Co., Ltd., Suwon-si, Gyeonggi-do 16677 (KR)
(72) Inventor: RHEE, Wonseok, Suwon-si, Gyeonggi-do 16677 (KR); KIM, Jinik, Suwon-si, Gyeonggi-do 16677 (KR); JIN, Seoyoung, Suwon-si, Gyeonggi-do 16677 (KR); KANG, Sunhee, Suwon-si, Gyeonggi-do 16677 (KR); PARK, Mijung, Suwon-si, Gyeonggi-do 16677 (KR); CHOI, Seonghoon, Suwon-si, Gyeonggi-do 16677 (KR); LEE, Jaeho, Suwon-si, Gyeonggi-do 16677 (KR); JUNG, Inhyung, Suwon-si, Gyeonggi-do 16677 (KR)
(74) Representative: Nederlandsch Octrooibureau
(86) International application number: PCT/KR2024/007065
(87) International publication number: WO 2025/018561

(57) **Abstract**

An electronic device is disclosed. The electronic device may identify an orientation of the electronic device as a tabletop state through data. The tabletop state may be a state in which a second housing part is closer to the ground than a first housing part, the second housing part is arranged to be relatively horizontal with respect to the ground, and the angle of the second housing part with respect to the first housing part is within a specified angle range. The electronic device may display the screen in a first direction through a sub-display while the tabletop state is maintained. The electronic device may display the screen in a second direction opposite to the first direction through the sub-display while the electronic device has a state different from the tabletop state.

## Description

### [Technical Field]

The following descriptions relate to an electronic device, a method, and a non-transitory computer readable storage medium for displaying a rotated screen.

### [Background Art]

An electronic device such as a smartphone may include various sensors for providing an improved function and usability to a user. Together with provision of this function, for example, a foldable electronic device is being developed as a device that combines compactness and portability.

### [Disclosure]

### [Technical Solution]

An electronic device is disclosed. The electronic device may comprise a housing including a first housing part, and a second housing part which is movably arranged between a folded status and an unfolded status with respect to the first housing part. The electronic device may comprise a flexible display of which at least a portion is bendable according to relative motion of the second housing part with respect to the first housing part. The electronic device may comprise a sub display included on a second surface opposite to a first surface of the first housing part on which the flexible display is included. The electronic device may comprise a sensor for obtaining data indicating a degree of horizontality of the electronic device. The electronic device may comprise at least one processor comprising processing circuitry. The electronic device may comprise memory storing instructions. The instructions, when executed by the at least one processor individually or collectively, may cause the electronic device to identify a posture of the electronic device as a table top state through the data. The table top state may be a state where the second housing part is closer to ground than the first housing part, the second housing part is arranged to be relatively horizontal with respect to the ground, and an angle of the second housing part with respect to the first housing part is within a specified angle range. The instructions, when executed by the at least one processor individually or collectively, may cause the electronic device to, while the table top state is maintained, display a screen in a first direction through the sub display. The instructions, when executed by the at least one processor individually or collectively, may cause the electronic device to, while the electronic device has another state different from the table top state, display the screen in a second direction opposite to the first direction through the sub display.

A method is disclosed. The method may be executed by an electronic device including a housing including a first housing part, and a second housing part which is movably arranged between a folded status and an unfolded status with respect to the first housing part, a flexible display of which at least a portion is bendable according to relative motion of the second housing part with respect to the first housing part, a sub display included on a second surface opposite to a first surface of the first housing part on which the flexible display is included, and a sensor for obtaining data indicating a degree of horizontality of the electronic device. The method may comprise identifying a posture of the electronic device as a table top state through the data. The table top state may be a state where the second housing part is closer to ground than the first housing part and the second housing part is arranged to be relatively horizontal with respect to the ground. The method may comprise, while the table top state is maintained and an angle of the second housing part with respect to the first housing part is within a specified angle range, displaying a screen in a first direction through the sub display. The method may comprise, while the electronic device has another state different from the table top state, or the angle is outside the specified angle range, displaying the screen in a second direction opposite to the first direction through the sub display.

A non-transitory computer readable storage medium is disclosed. The non-transitory computer readable storage medium may store a program including instructions. The instructions, when executed by a processor of an electronic device including a housing including a first housing part, and a second housing part which is movably arranged between a folded status and an unfolded status with respect to the first housing part, a flexible display of which at least a portion is bendable according to relative motion of the second housing part with respect to the first housing part, a sub display included on a second surface opposite to a first surface of the first housing part on which the flexible display is included, and a sensor for obtaining data indicating a degree of horizontality of the electronic device, may cause the electronic device to identify a posture of the electronic device as a table top state through the data. The table top state may be a state where the second housing part is closer to ground than the first housing part, the second housing part is arranged to be relatively horizontal with respect to the ground. The instructions, when executed by the processor, may cause the electronic device to, while the table top state is maintained and an angle of the second housing part with respect to the first housing part is within a specified angle range, display a screen in a first direction through the sub display. The instructions, when executed by the processor, may cause the electronic device to, while the electronic device has another state different from the table top state, or the angle is outside the specified angle range, display the screen in a second direction opposite to the first direction through the sub display.

### [Description of the Drawings]

FIG. 1 is a block diagram of an electronic device in a network environment, according to various embodiments.
FIG. 2A illustrates an example of an unfolded state of an electronic device, according to an embodiment.
FIG. 2B illustrates an example of a folded state of an electronic device, according to an embodiment.
FIG. 2C illustrates an example of an intermediate state of an electronic device, according to an embodiment.
FIG. 3A illustrates an example of a folded state, an intermediate state, and an unfolded state of an electronic device.
FIG. 3B illustrates an example of folded states of an electronic device aligned in different directions.
FIG. 3C illustrates an example of intermediate states of an electronic device aligned in different directions.
FIG. 4A illustrates an example of screens displayed on a second display according to a state of an electronic device.
FIG. 4B illustrates an example of screens displayed on a second display according to a state of an electronic device.
FIG. 4C illustrates an example of screens displayed on a second display according to a state of an electronic device.
FIG. 4D illustrates an example of screens displayed on a second display according to a state of an electronic device.
FIG. 4E illustrates an example of screens displayed on a second display according to a state of an electronic device.
FIG. 5A illustrates an example of screens displayed on a second display along a direction in which an electronic device is aligned.
FIG. 5B illustrates an example of screens displayed on a second display along a direction in which an electronic device is aligned.
FIG. 6 is a flowchart indicating an operation performed by an electronic device, according to an embodiment.
FIG. 7A is a flowchart indicating an operation performed by an electronic device, according to an embodiment.
FIG. 7B illustrates an example of a folded state, an intermediate state, and an unfolded state of an electronic device, according to an embodiment.
FIG. 8 is a flowchart indicating an operation performed by an electronic device, according to an embodiment.
FIG. 9 is a flowchart indicating an operation performed by an electronic device, according to an embodiment.
FIG. 10 is a flowchart indicating an operation performed by an electronic device, according to an embodiment.
FIG. 11 is a flowchart indicating an operation performed by an electronic device, according to an embodiment.
FIG. 12 is a flowchart indicating an operation performed by an electronic device, according to an embodiment.
FIG. 13 is a flowchart indicating an operation performed by an electronic device, according to an embodiment.

### [Mode for Invention]

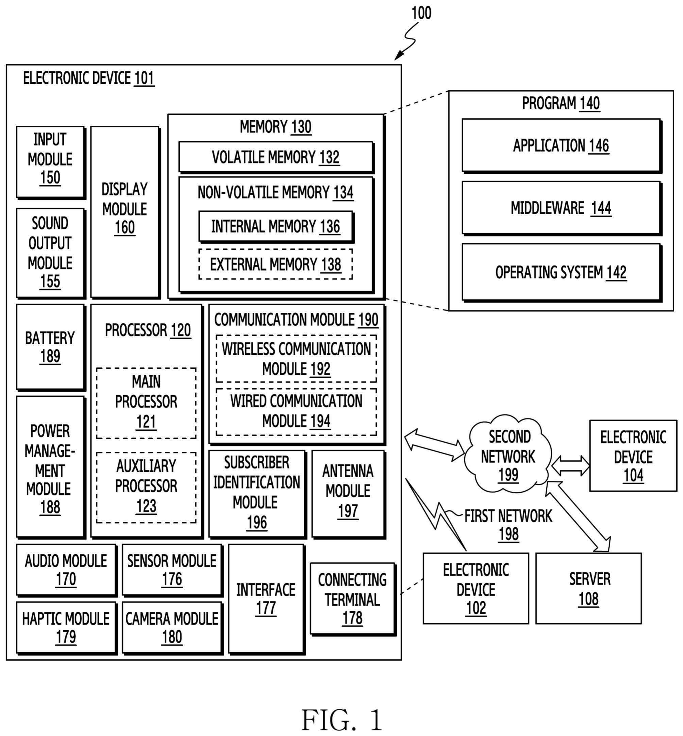

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

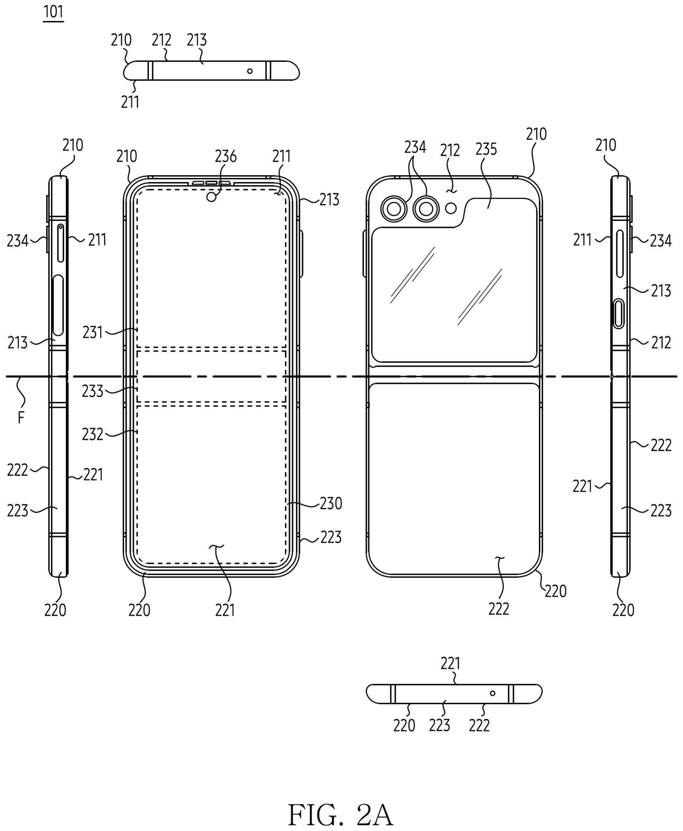

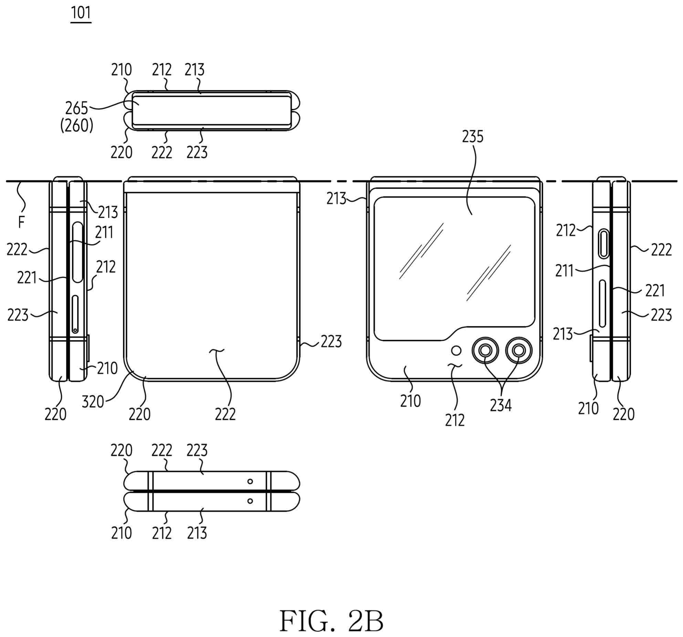

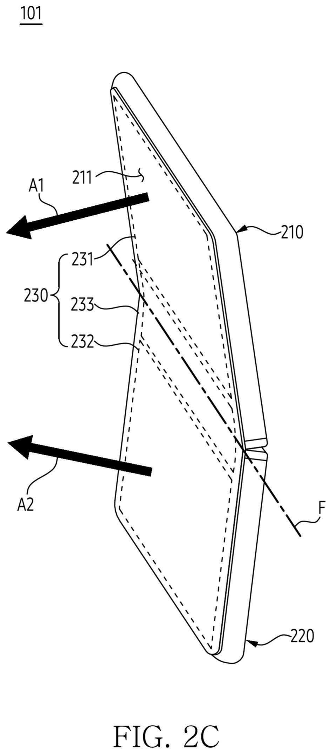

FIG. 2A illustrates an example of an unfolded state of an electronic device, according to an embodiment. FIG. 2B illustrates an example of a folded state of an electronic device, according to an embodiment. FIG. 2C illustrates an example of an intermediate state of an electronic device, according to an embodiment.

Referring to FIGS. 2A and 2B, an electronic device 101 may include a first housing 210, a second housing 220, and a hinge structure (or a hinge assembly) 260. In an embodiment, the first housing 210 may be rotatably connected to the hinge structure 260. The first housing 210 may rotate with respect to the second housing 220 through the hinge structure 260. In an embodiment, the second housing 220 may be rotatably connected to the hinge structure 260. The second housing 220 may rotate with respect to the first housing 210 through the hinge structure 260.

In an embodiment, the first housing 210 may include a first surface 211, a second surface 212 faced away from the first surface 211, and a third surface 213 covering at least a portion of the first surface 211 and the second surface 212. In an embodiment, the first housing 210 may provide a space for disposing components of the electronic device 101. In an embodiment, the first housing 210 may include a conductive material, a non-conductive material, or a combination thereof. The first surface 211, the second surface 212, and the third surface 213 of the first housing 210 may be referred to as a front surface, a rear surface, and a lateral surface of the first housing 210, respectively.

In an embodiment, the second housing 220 may include a first surface 221, a second surface 222 faced away from the first surface 221, and a third surface 223 covering at least a portion of the first surface 221 and the second surface 222. In an embodiment, the second housing 220 may provide a space for disposing components of the electronic device 101. The first surface 221, the second surface 222, and the third surface 223 of the second housing 220 may be referred to as a front surface, a rear surface, and a lateral surface of the second housing 220, respectively.

In an embodiment, the hinge structure 260 may be connected to the first housing 210 and the second housing 220, respectively. For example, the hinge structure 260 may include a first hinge plate and a second hinge plate configured to be rotatable. The first hinge plate may be connected to the first housing 210, and the first housing 210 may be rotated by the first hinge plate. The second hinge plate may be connected to the second housing 220, and the second housing 220 may be rotated by the second hinge plate.

According to an embodiment, the electronic device 101 may be folded or unfolded based on a folding axis F passing through the hinge structure 260 according to rotation of the first housing 210 and the second housing 220. For example, the hinge structure 260 may be located between the first housing 210 and the second housing 220 such that the electronic device 101 may be folded based on the folding axis F.

In an embodiment, the hinge structure 260 may include a hinge cover 265 for covering an internal structure (e.g., a hinge mechanism). The hinge cover 265 may be exposed to the outside according to a degree to which the electronic device 101 is folded, or may be covered by the first housing 210 and the second housing 220. While the electronic device 101 is in a folded state (e.g., FIG. 2B), the hinge cover 265 may be at least partially exposed through a space between the first housing 210 and the second housing 220. For example, while the electronic device 101 is in an unfolded state (e.g., FIG. 2A), the hinge cover 265 may be covered by the first housing 210 and the second housing 220.

According to an embodiment, the electronic device 101 may include a first display 230 (e.g., the display module 160 of FIG. 1) disposed in a space provided by the first housing 210 and the second housing 220. For example, the first display 230 may be at least partially accommodated in a recess formed on the first surface 211 of the first housing 210 and the first surface 221 of the second housing 220. In an embodiment, the first display 230 may include a first flat part 231 aligned with respect to the first housing 210, a second flat part 232 spaced apart from the first flat part 231 and aligned with respect to the second housing 220, and a folding part 233 aligned with respect to the hinge structure 260 and extending from the first flat part 231 to the second flat part 232. The first display 230 may be referred to as a foldable display or a flexible display. The first flat part 231, the second flat part 232, and the folding part 233 may form a surface of the first display 230. The surface of the first display 230 may at least partially form the first surface 211 of the first housing 210 and the first surface 221 of the second housing 220. The first flat part 231, the second flat part 232, and the folding part 233 may be referred to as a first area, a second area, and a folding area of the first display 230, respectively.

In an embodiment, the electronic device 101 may include a second display 235 (e.g., the display module 160 of FIG. 1) disposed in the first housing 210. The second display 235 may be viewed through the second surface 222 of the first housing 210.

According to an embodiment, the electronic device 101 may include a plurality of cameras (e.g., the camera module 180 of FIG. 1). For example, the electronic device 101 may include cameras 234 and 236. In an embodiment, the camera 234 may be disposed in the first housing 210 to obtain an image through a portion of the second surface 212. In an embodiment, the camera 236 may be disposed under the first flat part 231 of the first display 230. The camera 236 may be aligned with an opening at least partially penetrating the first flat part 231, and may obtain an image through the opening. The camera 236 may be located in a screen display area of the first display 230, but is not limited thereto.

Hereinafter, states of the electronic device 101 will be described with reference to FIGS. 2A, 2B, and 2C. According to an embodiment, the electronic device 101 may include the unfolded state (e.g., FIG. 2A), the folded state (e.g., FIG. 2B), and the intermediate state (e.g., FIG. 2C). The electronic device 101 may vary between the unfolded state and the folded state, and the intermediate state may be a state between the unfolded state and the folded state. In an embodiment, an angle between the first housing 210 and the second housing 220 may vary according to a state of the electronic device 101.

First, referring to FIG. 2A, in the unfolded state, the first housing 210 and the second housing 220 may form a first angle. As a non-limiting example, the first angle may be approximately 180°. The first flat part 231, the second flat part 232, and the folding part 233 of the first display 230 may form a substantially flat surface. A first direction (e.g., a first direction A1 of FIG. 2C) in which the first surface 211 (or the first flat part 231) of the first housing 210 faces and a second direction (e.g., a second direction A2 of FIG. 2C) in which the first surface 221 (the second flat part 232) of the second housing 220 faces may be substantially the same.

Referring to FIG. 2B, in the folded state of the electronic device 101, the first housing 210 and the second housing 220 may be folded to face each other, by rotating based on the folding axis F. The first housing 210 and the second housing 220 may be overlapped with each other to form a second angle smaller than the first angle. As a non-limiting example, the second angle may be approximately 0°. The folding part 233 of the first display 230 may be bent to correspond to the second angle. The first surface 211 of the first housing 210 may face the first surface 221 of the second housing 220. The first housing 210 and the second housing 220 may at least partially contact each other, but is not limited thereto. The first direction in which the first surface 211 of the first housing 210 faces and the second direction in which the first surface 221 of the second housing 220 faces may be opposite to each other. In the folded state, at least a portion of the first display 230 may not be visible from the outside of the electronic device 101, and the second display 235 may be visible from the outside of the electronic device 101.

Referring to FIG. 2C, in the intermediate state, the first housing 210 and the second housing 220 may form a third angle that is smaller than the first angle and greater than the second angle. The folding part 233 of the first display 230 may be bent to correspond to the third angle.

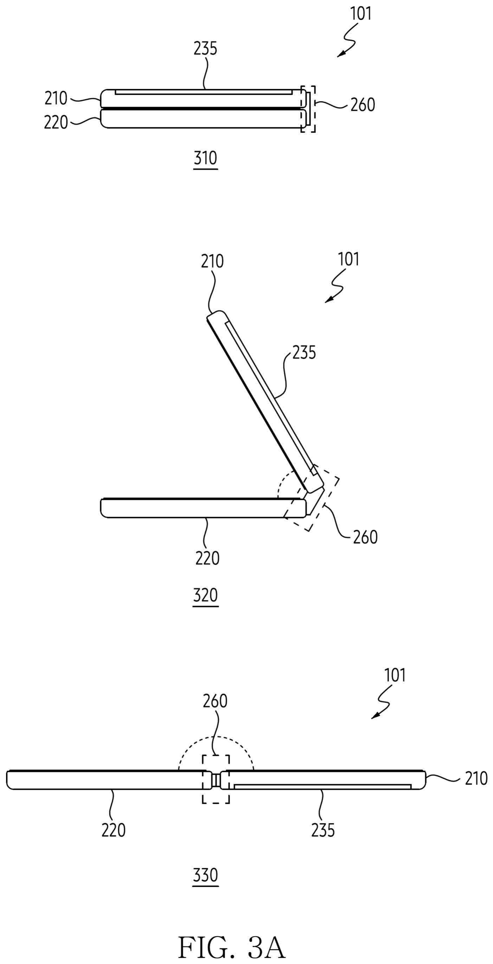

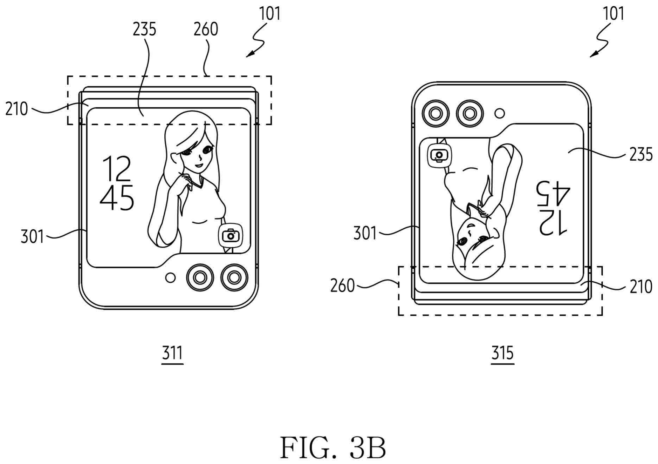

FIG. 3A illustrates an example of a folded state 310, an intermediate state 320, and an unfolded state 330 of an electronic device 101. FIG. 3B illustrates an example of folded states 311, and 315 of an electronic device 101 aligned in different directions. FIG. 3B illustrates an example of intermediate states 321, and 325 of an electronic device 101 aligned in different directions.

In an embodiment, the electronic device 101 may identify a posture of the electronic device 101. For example, the electronic device 101 may obtain data indicating a degree of horizontality (or data based on a 6-axis sensor) of the electronic device 101 through a sensor module 176. For example, the electronic device 101 may identify the posture of the electronic device 101 based on the data indicating the degree of horizontality of the electronic device 101. For example, the electronic device 101 may obtain data indicating a degree of folding of the electronic device 101 through the sensor module 176. For example, the electronic device 101 may identify the posture of the electronic device 101 based on the data indicating the degree of folding of the electronic device 101.

In an embodiment, the electronic device 101 may identify the degree of folding of the electronic device 101 and/or the degree of horizontality of the electronic device 101 based on data related to the posture of the electronic device 101 through the sensor module 176.

In an embodiment, the electronic device 101 may display a screen on a second display 235 in a normal state in the folded state 310. In an embodiment, the electronic device 101 may display the screen on the second display 235 in the normal state in response to identifying in the folded state 310 based on data.

In an embodiment, the electronic device 101 may display the screen on the second display 235 in the normal state regardless of an orientation of the electronic device 101 in the folded state 310. For example, in a case that the electronic device 101 is substantially perpendicular to ground in the folded state 310, the electronic device 101 may display the screen on the second display 235 in the normal state in the folded state 310. For example, even in a case that the electronic device 101 is substantially perpendicular to the ground in the folded state 310, and a hinge structure 260 faces the ground or faces opposite to the ground, the electronic device 101 may display the screen on the second display 235 in the normal state in the folded state 310. For example, in a case that the electronic device 101 is substantially horizontal to the ground in the folded state 310, the electronic device 101 may display the screen on the second display 235 in the normal state in the folded state 310. The electronic device 101 being substantially perpendicular to the ground may mean that a first surface 211 and/or a second surface 212 of the electronic device 101 may be substantially perpendicular to the ground. The electronic device 101 being substantially horizontal to the ground may mean the first surface 211 and/or the second surface 212 of the electronic device 101 may be substantially horizontal to the ground. Herein, the normal state may be a state where the screen is arranged such that an upper portion of the screen is adjacent to the hinge structure 260. Herein, the electronic device 101 being substantially perpendicular to the ground may mean that an angle formed by the electronic device 101 with the ground is 90 ° or within a predetermined range (e.g., 10°) from 90°. Herein, the electronic device 101 being substantially horizontal to the ground may mean that an angle formed by the electronic device 101 with the ground is 0° or within a predetermined range (e.g., 10°) from 0°degrees.

Referring to FIG. 3B, in the folded state 311 where the electronic device 101 is perpendicular to the ground and the hinge structure 260 faces in a direction opposite to the ground (or upward), the electronic device 101 may display a screen 301 in the normal state. In the folded state 315 where the electronic device 101 is perpendicular to the ground and the hinge structure 260 faces in the ground direction (or downward), the electronic device 101 may display the screen 301 in the normal state.

In an embodiment, the electronic device 101 may display a screen on the second display 235 in the normal state or in a rotated state in the intermediate state 320. In an embodiment, the electronic device 101 may display the screen on the second display 235 in the normal state or in the rotated state, in response to being identified in the intermediate state 320 based on data. Herein, the rotated state may be an arranged state where the screen is arranged such that a lower portion of the screen is adjacent to the hinge structure 260. For example, the screen in the rotated state may be rotated by 180° from the screen in the normal state. Hereinafter, the screen in a state rotated by 180° may be referred to as being displayed in the first direction. The screen in the normal state may be referred to as being displayed in the second direction. Herein, the first direction may be a direction opposite to the second direction.

In an embodiment, the electronic device 101 may display the screen on the second display 235 in a selected direction among the first direction and the second direction according to an angle between the first housing 210 and the second housing 220 in the intermediate state 320. For example, in a case that the angle between the first housing 210 and the second housing 220 in the intermediate state 320 is within a specified angle range (e.g., 20° to 80°), the electronic device 101 may display the screen on the second display 235 in the first direction. For example, in a case that the angle between the first housing 210 and the second housing 220 in the intermediate state 320 is less than the specified angle range (e.g., less than 20°), the electronic device 101 may display the screen on the second display 235 in the second direction. For example, in a case that the angle between the first housing 210 and the second housing 220 in the intermediate state 320 exceeds the specified angle range (e.g., exceeds 80°), the electronic device 101 may display the screen on a first display 230 other than the second display 235. For example, in a case that the angle between the first housing 210 and the second housing 220 in the intermediate state 320 exceeds the specified angle range, the electronic device 101 may turn off the second display 235. Hereinafter, in the intermediate state 320, the electronic device 101 may display the screen on the second display 235 in the first direction. For example, in response to the electronic device 101 identifying that the second surface 212 is substantially horizontal to the ground in the intermediate state 320, the electronic device 101 may rotate the screen from the second direction to the first direction in the intermediate state 320. For example, in response to the electronic device 101 identifying that the second surface 212 is substantially horizontal to the ground in the intermediate state 320, the electronic device 101 may rotate the screen from the second direction to the first direction in the intermediate state 320 after a specified time period (e.g., 200 milliseconds). However, it is not limited to thereto.

In an embodiment, in a case that the electronic device 101 is in the intermediate state 320 and the second surface 212 is not substantially horizontal to the ground, the electronic device 101 may display a screen on the second display 235 in the intermediate state 320 in the second direction. For example, in a case that the electronic device 101 is in the intermediate state 320 and the second surface 212 is substantially perpendicular to the ground, the electronic device 101 may display the screen on the second display 235 in the intermediate state 320 in the second direction. Hereinafter, an angle with respect to the ground of the second surface 212 may be referred to as a ground angle. Herein, the second surface 212 being substantially perpendicular to the ground may mean that an angle formed by the second surface 212 with the ground is 90°, or within the predetermined range (e.g., 10°) from 90°. Herein, the second surface 212 being substantially horizontal to the ground may mean that an angle formed by the second surface 212 with the ground is 0°, or within the predetermined range (e.g., 10°) from 0°.

In an embodiment, the electronic device 101 may display the screen on the second display 235 in a direction selected among the first direction or the second direction, according to the angle with respect to the ground of the second surface 212 in the intermediate state 320 where the second surface 212 is closer to the ground than the first surface 211. For example, in a case the second surface 212 is substantially horizontal to the ground in a state where the first surface 211 is closer to the ground than the second surface 212 in the intermediate state 320, the electronic device 101 may display the screen on the second display 235 in the second direction other than the first direction.

In an embodiment, the electronic device 101 may display the screen on the second display 235 in a selected direction among the first direction and the second direction, according to a housing angle and the ground angle in the intermediate state 320. For example, in a case that the housing angle is within the specified angle range (e.g., 20° to 80°) and the ground angle is substantially 0° in the intermediate state 320, the electronic device 101 may display the screen on the second display 235 in the first direction. For example, in a case that the housing angle is outside the specified angle range or the ground angle is not substantially 0° in the intermediate state 320, the electronic device 101 may display the screen on the second display 235 in the second direction.

In an embodiment, the electronic device 101 may display the screen on the second display 235 in a selected direction among the first direction and the second direction, according to the housing angle and the ground angle in the intermediate state 320 where the second surface 212 is closer to the ground than the first surface 211. For example, in a case that the housing angle is within the specified angle range, and the ground angle is substantially 0° in the intermediate state 320 where the second surface 212 is closer to the ground than the first surface 211, the electronic device 101 may display the screen on the second display 235 in the first direction. For example, in a case that the housing angle is outside the specified angle range, or the ground angle is not substantially 0° in the intermediate state 320 where the second surface 212 is closer to the ground than the first surface 211, the electronic device 101 may display the screen on the second display 235 in the second direction.

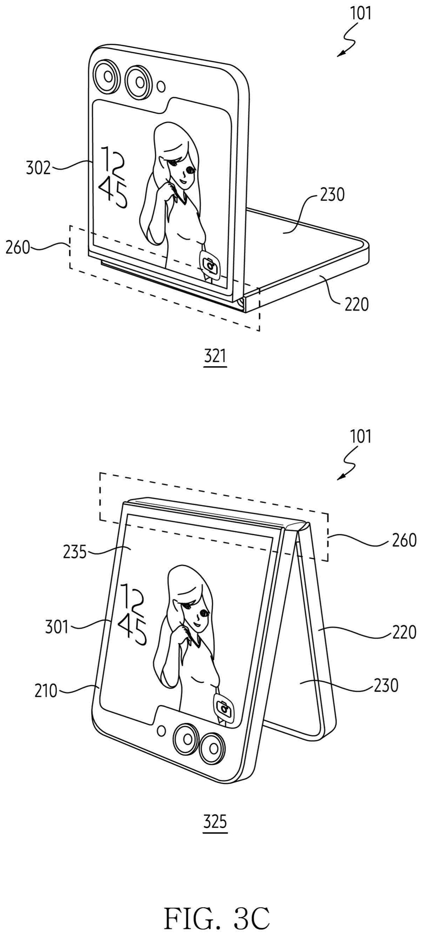

Referring to FIG. 3C, in the intermediate state 320 (or a table top state) where the housing angle is within the specified angle range, the ground angle is substantially 0°, and the second surface 212 is closer to the ground than the first surface 211, the electronic device 101 may display a screen 302 in the first direction. In the intermediate state 325 (or a tent state) where the housing angle is within the specified angle range, but the ground angle is not substantially 0° and the second surface 212 is not closer to the ground than the first surface 211, the electronic device 101 may display the screen 301 in the second direction. In an embodiment, in the intermediate state 320 where the housing angle is within the specified angle range (e.g., 20° to 80°), the table top state may be a state where the second housing 220 is closer to the ground than the first housing 210, and the second housing 220 is arranged to be relatively horizontal with respect to the ground (e.g., the ground angle is substantially 0°).

In an embodiment, the electronic device 101 may display the screen on the second display 235 in the first direction in the table top state. In an embodiment, the electronic device 101 may display the screen on the second display 235 in the second direction in another state other than the table top state. However, it is not limited to thereto.

According to an embodiment, while displaying the screen on the second display 235 in the first direction, the electronic device 101 may change functions assigned to buttons. For example, while displaying the screen on the second display 235 in the first direction, the electronic device 101 may change functions assigned to at least two physical buttons located on a lateral surface (or a third surface 213) of the first housing 210 of the electronic device 101. For example, in the table top state, the electronic device 101 may change the functions assigned to the at least two physical buttons located on the lateral surface (or the third surface 213) of the first housing 210 of the electronic device 101.

For example, while the table top state is maintained, the electronic device 101 may assign a first function to a first button of the at least two physical buttons and a second function opposite to the first function to a second button of the at least two physical buttons. For example, the first button may be located farther from the hinge structure 260 than the second button. In an embodiment, in the another state other than the table top state, the electronic device 101 may assign a volume-up function to the first button and a volume-down function to the second button. In an embodiment, in the table top state, the electronic device 101 may assign the volume-down function to the first button and the volume-up function to the second button. However, it is not limited thereto.

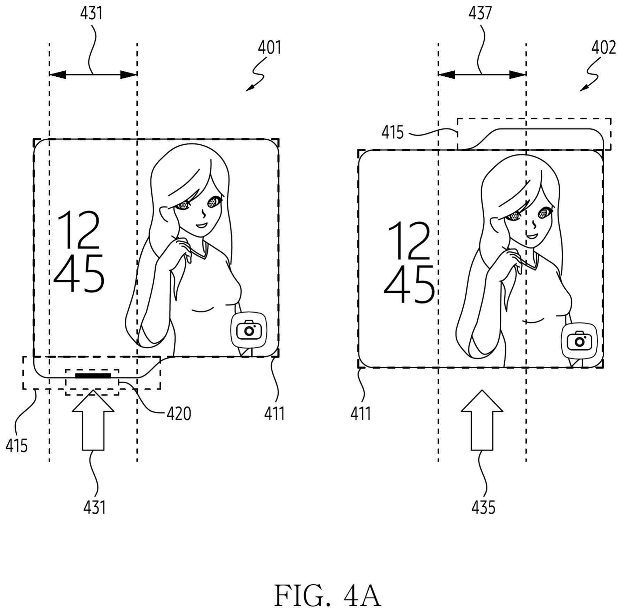

FIG. 4A illustrates an example of screens 401 and 402 displayed on a second display 235 according to a state of an electronic device 101.

FIG. 4A may be described with reference to FIGS. 1, 2A, 2B, 2C, 3A, 3B, and 3C.

Referring to FIG. 4A, the screen 401 may be a screen displayed through the second display 235 of the electronic device 101 in another state other than a table top state, and the screen 402 may be a screen displayed through the second display 235 of the electronic device 101 in the table top state.

In an embodiment, in the another state other than the table top state, the electronic device 101 may display the screen 401 in a second direction through the second display 235. In an embodiment, in the another state other than the table top state, the electronic device 101 may display the screen 401 in the second direction through a notch area 415 and a display area 411 of the second display 235. In an embodiment, in the table top state, the electronic device 101 may display the screen 401 in a first direction through a portion of the second display 235. In an embodiment, the another state other than the table top state may be an intermediate state 320 in a tent state or a folded state 310. In an embodiment, the another state other than the table top state may be a state where a housing angle is outside a specified angle range, or a second housing 220 is not closer to the ground than a first housing 210, or the second housing 220 is arranged so as not to be relatively horizontal with respect to the ground. For example, the another state other than the table top state may include the intermediate state 320 where the housing angle is outside the specified angle range (e.g., 20° to 80°). For example, the another state other than the table top state may include the intermediate state 320 where a ground angle is not substantially 0° (e.g., the tent state). For example, the another state other than the table top state may include the folded state 310.

In an embodiment, the electronic device 101 may display an image object 420 for a hint on the notch area 415. In an embodiment, the electronic device 101 may display the image object 420 for the hint on the notch area 415, while displaying the screen 401 in the second direction. In an embodiment, in a case that a state of the electronic device 101 has the another state other than the table top state, the electronic device 101 may display the image object 420 for the hint on the notch area 415. For example, the image object 420 may be an object for notifying a user that a specified function (e.g., payment) may be performed through the image object 420.

In an embodiment, the electronic device 101 may change the screen 401 to another screen related to the image object 420, in response to an input 431 to the image object 420 for the hint. In an embodiment, the electronic device 101 may change the screen 401 to the another screen related to the image object 420, in response to a swipe input 431 in a specified direction (e.g., an upward direction of the screen 401) from the image object 420 for the hint. In an embodiment, the electronic device 101 may change the screen 401 to the another screen related to the image object 420 based on the swipe input 431 starting in the notch area 415. In an embodiment, the electronic device 101 may change the screen 401 to the another screen related to the image object 420 based on the swipe input 431 starting from a lower portion of a relatively left portion 433 of the screen 401. For example, the electronic device 101 may change the screen 401 to a screen for payment related to the image object 420, in response to the input 431 to the image object 420 for the payment.

According to an embodiment, the electronic device 101 may identify the table top state. For example, the electronic device 101 may obtain data indicating a degree of horizontality (or data based on a 6-axis sensor) of the electronic device 101 through a sensor module 176. For example, the electronic device 101 may identify the table top state of the electronic device 101 based on the data indicating the degree of horizontality of the electronic device 101.

In an embodiment, in response to identifying the table top state, the electronic device 101 may rotate the screen 402 from the second direction to the first direction. In an embodiment, while the table top state is maintained, the electronic device 101 may display the screen 402 only in the display area 411 of the second display 235 in the first direction. The electronic device 101 may output a specified color (e.g., black) to the notch area 415 while displaying the screen 402 in the first direction through the display area 411 of the second display 235. The electronic device 101 may turn off the notch area 415 while displaying the screen 402 in the first direction through the display area 411 of the second display 235.

In an embodiment, while the table top state is maintained, the electronic device 101 may cease displaying the image object 420 for the hint. In an embodiment, while displaying the screen 402 in the first direction through the display area 411 of the second display 235, the electronic device 101 may cease displaying the image object 420 for the hint.

In an embodiment, the electronic device 101 may change the screen 401 to the another screen related to an image object 425, in response to an input 435 to the image object 425 for the hint. In an embodiment, while the table top state is maintained, the electronic device 101 may change the screen 401 to the another screen, in response to the swipe input 435 in the specified direction (e.g., the upward direction of the screen 401) from the image object 425 for the hint. However, it is not limited thereto. For example, while the table top state is maintained, the electronic device 101 may change the screen 401 to the another screen, in response to the swipe input 435 in the specified direction (e.g., the upward direction of the screen 401) from a lower side of a relatively central portion 437 of the screen 402. However, it is not limited thereto. For example, the electronic device 101 may change the screen 401 to the another screen, in response to the swipe input 435 in the specified direction (e.g., the upward direction of the screen 401) from a lower side of another portion (e.g., a left side or a right side) other than a lower side of the relatively central portion 437.

In an embodiment, the electronic device 101 may change the screen 402 to the another screen, in response to the swipe input 435.

In an embodiment, while the table top state is maintained, the electronic device 101 may cease executing a specified application. In an embodiment, while the table top state is maintained, the electronic device 101 may not execute the specified application. For example, while the table top state is maintained, the electronic device 101 may cease executing an application related to the payment.

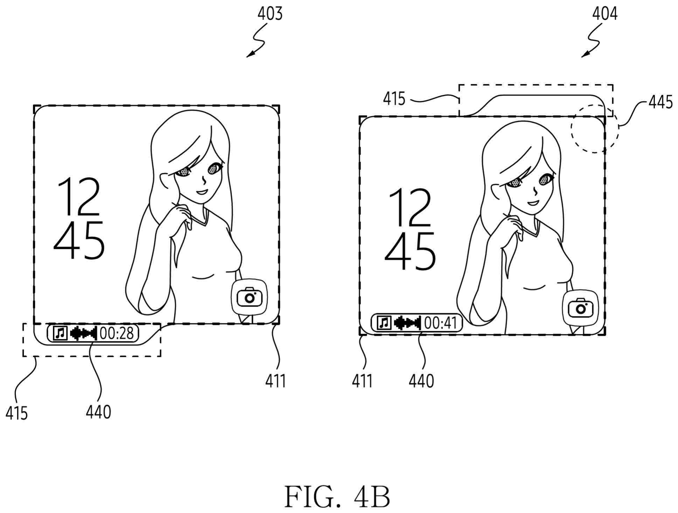

FIG. 4B illustrates an example of screens 403 and 404 displayed on a second display 235 according to a state of an electronic device 101.

FIG. 4B may be described with reference to FIGS. 1, 2A, 2B, 2C, 3A, 3B, and 3C.

Referring to FIG. 4B, the screen 403 may be a screen displayed through the second display 235 of the electronic device 101 in another state other than a table top state, and the screen 404 may be a screen displayed through the second display 235 of the electronic device 101 in the table top state.

In an embodiment, in the another state other than the table top state, the electronic device 101 may display the screen 403 in a second direction through the second display 235. In an embodiment, in the another state other than the table top state, the electronic device 101 may display the screen 403 in the second direction through a notch area 415 and a display area 411 of the second display 235. In an embodiment, in the table top state, the electronic device 101 may display the screen 403 through a portion of the second display 235 in a first direction. In an embodiment, the another state other than the table top state may include an intermediate state 320 where a housing angle is outside a specified angle range (e.g., 20° to 80°). In an embodiment, the another state other than the table top state may include the intermediate state 320 where a ground angle is not substantially 0° (e.g., a tent state). For example, the another state other than the table top state may include the folded state 310.

In an embodiment, the screen 403 or 404 may include an image object 440. In an embodiment, the image object 440 may indicate an application being executed in a background. In an embodiment, the image object 440 may display information related to the application being executed in the background. In an embodiment, the image object 440 may also be referred to as a capsule or ongoing activity. In an embodiment, the image object 310 may be related to an application most recently executed in a foreground among one or more applications being executed in the background.

In an embodiment, the electronic device 101 may display the image object 440 on the screen 403 or 404 by switching from another screen to the screen 403 or 404. For example, the electronic device 101 may display the image object 440 indicating information related to an application on the screen 403 or 404, by switching from a screen of the application being executed in the foreground to the screen 403 or 404.

In an embodiment, the electronic device 101 may execute an application in the foreground, based on an input (e.g., a tap input) for selecting the image object 440. For example, in an embodiment, the electronic device 101 may display a screen indicating an execution result and/or an execution state of the application, based on the input (e.g., the tab input) for selecting the image object 440.

In an embodiment, the electronic device 101 may display the image object 440 at a specified location on the screen 403 or 404. In an embodiment, the electronic device 101 may display the image object 440 on the notch area 415 of the second display 235. For example, the electronic device 101 may display the image object 440 on the notch area 415 of the second display 235 in the another state other than the table top state. In an embodiment, the electronic device 101 may display the image object 440 in the display area 411 of the second display 235. For example, the electronic device 101 may display the image object 440 in the display area 411 of the second display 235 in the table top state. For example, the electronic device 101 may display the image object 440 in a lower portion of a relatively left portion of the screen 403. For example, the electronic device 101 may display the image object 440 in the lower portion of the relatively left portion of the screen 403 in the table top state.

In an embodiment, the electronic device 101 may output a specified color instead of the screen 403 through a portion of the display area 411 in the table top state. In an embodiment, the electronic device 101 may output the specified color instead of the screen 403 through a portion of a corner of the display area 411 adjacent to the notch area 415. For example, the electronic device 101 may output the specified color instead of the screen 403 through the portion such that the corner of the display area 411 adjacent to the notch area 415 appears to have the same curvature as other corners of a display 420. For example, while the table top state is maintained, the electronic device 101 may output the specified color through the portion of the corner of the display area 411 such that the corner of the display area 411 adjacent to the notch area 415 appears as a rounded corner.

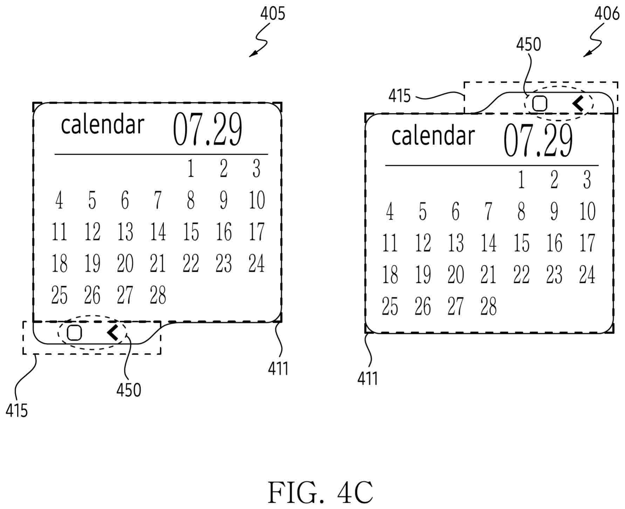

FIG. 4C illustrates an example of screens 405 and 406 displayed on a second display 235 according to a state of the electronic device 101.

FIG. 4C may be described with reference to FIGS. 1, 2A, 2B, 2C, 3A, 3B, and 3C.

In an embodiment, the electronic device 101 may display a navigation bar including at least three navigation buttons in a portion of a first display 230. For example, the electronic device 101 may display the navigation bar including three navigation buttons for recent, home, and going back in the portion of the first display 230.

Referring to FIG. 4C, in another state other than the table top state, the electronic device 101 may display the screen 405 including a navigation bar 450 in a second direction through the second display 235. In the another state other than the table top state, the electronic device 101 may display the navigation bar 450 on a notch area 415. Herein, the navigation bar 450 may include a smaller number of navigation buttons than the navigation bar displayed through the first display 230. For example, the navigation bar 450 may include two navigation buttons for home, and going back.

In an embodiment, in the table top state, the electronic device 101 may display the screen 406 including the navigation bar 450 in the second direction through the second display 235. In the table top state of the electronic device 101, the electronic device 101 may display the navigation bar 450 on the notch area 415.

When the screen 405 is compared with the screen 406, the navigation bar 450 may be displayed on the notch area 415. As the screen 406 rotated from the screen 405 is displayed on the second display 235, the navigation bar 450 of the screen 406 rotated from the navigation bar 450 of the screen 405 may be displayed on the notch area 415. Therefore, when a user looks at the screen 405 or 406, the user may recognize that disposition of two navigation buttons is the same. For example, on the screen 405 or 406, a navigation button for home may be located on a left side of a navigation button for going back.

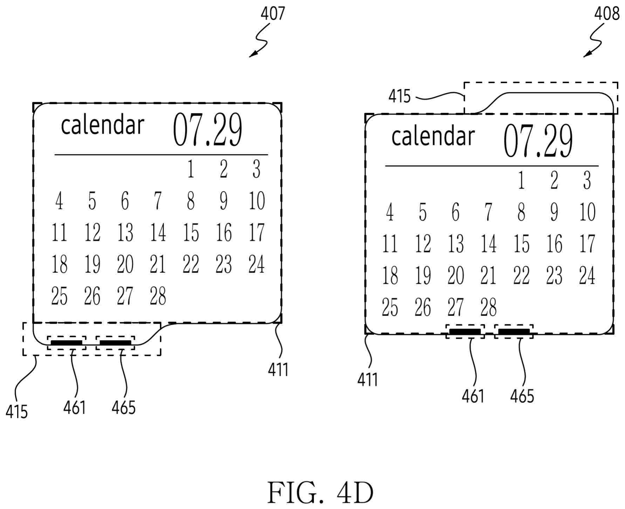

FIG. 4D illustrates an example of screens 405 and 406 displayed on a second display 235 according to a state of an electronic device 101.

FIG. 4D may be described with reference to FIGS. 1, 2A, 2B, 2C, 3A, 3B, and 3C.

Referring to FIG. 4D, in another state other than a table top state, the electronic device 101 may display a screen 407 including image objects 461 and 465 for a hint in a second direction through the second display 235. In the another state other than the table top state of the electronic device 101, the electronic device 101 may display the image objects 461 and 465 for the hint on the notch area 415. Herein, the image objects 461 and 465 for the hint may be image objects for two hints for home and going back.

In an embodiment, in the table top state, the electronic device 101 may change a display location of the image objects 461 and 465 for the hint. In an embodiment, in the table top state, the electronic device 101 may display the image objects 461 and 465 for the hint on a lower side of a relatively central portion 437.

Comparing the screen 407 with a screen 408, in the another state other than the table top state, the image objects 461 and 465 for the hint are displayed on the notch area 415, whereas in the table top state, the image objects 461 and 465 for the hint may be displayed in an area other than the notch area 415. A location relationship of the image objects 461 and 465 of the screen 407 may be the same as a location relationship of the image objects 461 and 465 of the screen 408. For example, on the screen 407, the image object 461 may be located on a left side of the image object 465, and on the screen 408, the image object 461 may be located on a left side of the image object 465. Therefore, when looking at the screens 407 and 408, the user may recognize that disposition of the image objects 461 and 465 is the same.

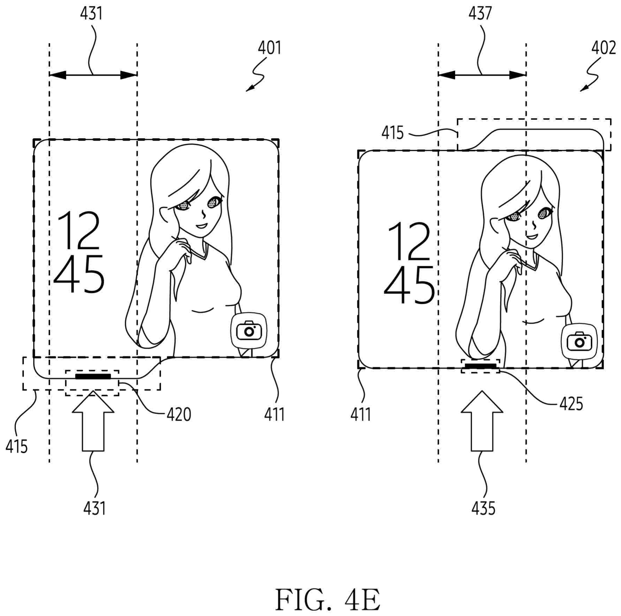

FIG. 4E illustrates an example of screens 401 and 402 displayed on a second display 235 according to a state of an electronic device 101.

FIG. 4E may be described with reference to FIGS. 1, 2A, 2B, 2C, 3A, 3B, 3C, and 4A.

FIG. 4E may illustrate an example of changing a display location of the image object 420 for the hint in the table top state compared to FIG. 4A. For example, referring to FIG. 4E, in the table top state, the image object 425 for the hint may be displayed on a lower side of the relatively central portion 437.

In an embodiment, while the table top state is maintained, the electronic device 101 may change the display location of the image object 420 for the hint. In an embodiment, while displaying the screen 402 in a first direction through a display area 411 of the second display 235, the electronic device 101 may change the display location of the image object 420 for the hint. In an embodiment, while displaying the screen 402 in the first direction through the display area 411 of the second display 235, the electronic device 101 may display the image object 425 for the hint on the lower side of the relatively central portion 437. For example, the image object 425 may be an object for notifying the user that another function specified may be performed through the image object 425.

In an embodiment, the electronic device 101 may change the screen 402 to another screen (e.g., a home screen, and a previous screen), in response to a swipe input 435 to the image object 425.

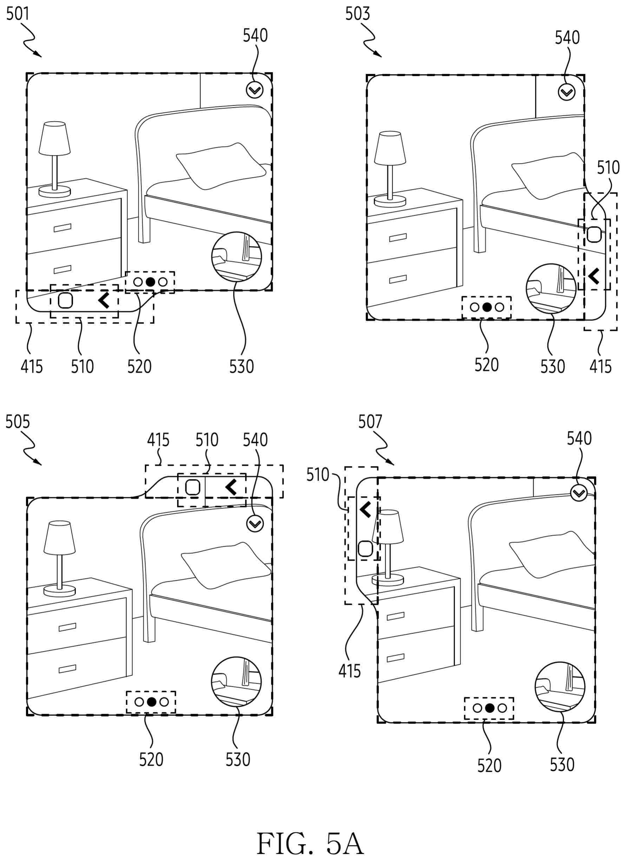

FIG. 5A illustrates an example of screens 501, 503, 505, and 507 displayed on a second display 235 along a direction in which an electronic device 101 is aligned.

FIG. 5A may be described with reference to FIGS. 1, 2A, 2B, 2C, 3A, 3B, and 3C.

FIG. 5A may exemplify a situation in which a camera application operates in a foreground through the second display 235 in a folded state (e.g., FIG. 2B) or an intermediate state (e.g., FIG. 2C).

Referring to FIG. 5A, in a first state where a hinge structure 260 of the electronic device 101 is farther from ground than a first housing 210, the electronic device 101 may display the screen 501 of a camera application in a normal state. In an embodiment, in a second state where the electronic device 101 is rotated 90° counterclockwise from the first state, the electronic device 101 may display the screen 503 of the camera application in a state rotated 90° from the normal state. In an embodiment, in a third state where the electronic device 101 is rotated 90° counterclockwise from the second state, the electronic device 101 may display the screen 505 of the camera application in a state rotated 90° from the normal state. In an embodiment, in a fourth state where the electronic device 101 is rotated 90° counterclockwise from the third state, the electronic device 101 may display the screen 507 of the camera application in a state rotated 90° from the normal state.

In an embodiment, referring to the screens 501, 503, 505, and 507 in different states, a portion of image objects may be displayed at a fixed location regardless of rotation of the electronic device 101. For example, a navigation bar 510 may be displayed on a notch area 415 regardless of the rotation of the electronic device 101. However, it is not limited thereto.

In an embodiment, referring to the screens 501, 503, 505, and 507 in the different states, a portion of image objects 520, 530, and 540 may be displayed at a location moved according to the rotation of the electronic device 101. For example, the image object 520 indicating a shooting mode may be displayed in an area adjacent to the ground of the screens 501, 503, 505, and 507 according to the rotation of the electronic device 101. For example, the image object 530 indicating a thumbnail of an image stored in a gallery may be displayed in a right area of the area in which the image object 520 is displayed on the screens 501, 503, 505, and 507 according to the rotation of the electronic device 101. For example, the image object 540 for a menu may be displayed in an area of an upper portion of a right portion of the screens 501, 503, 505, and 507 according to the rotation of the electronic device 101. However, it is not limited thereto.

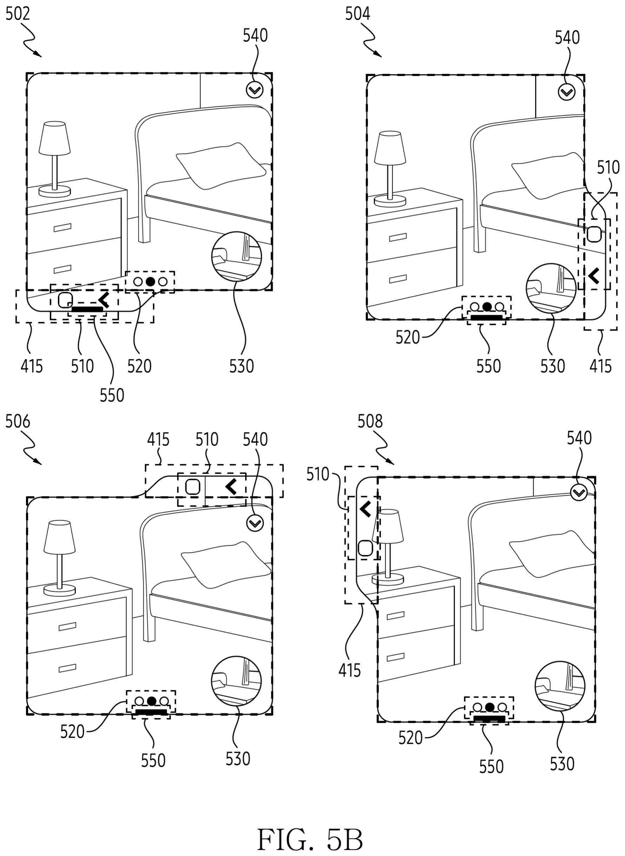

FIG. 5B illustrates an example of screens 502, 504, 506, and 508 displayed on a second display 235 along a direction in which an electronic device 101 is aligned.

FIG. 5B may be described with reference to FIGS. 1, 2A, 2B, 2C, 3A, 3B, 3C, and 5A.

The screens 502, 504, 506, and 508 of FIG. 5B may further display an image object 550 for a hint, compared to the screens 501, 503, 505, and 507 of FIG. 5A. For example, the image object 550 may be an object for notifying the user that a specified function (e.g., payment, going back, home movement) may be performed through the image object 550.

Referring to FIG. 5B, in a first state where the hinge structure 260 of the electronic device 101 is farther from the ground than a first housing 210, the electronic device 101 may display the screen 502 of a camera application in a normal state. In an embodiment, in a second state where the electronic device 101 is rotated 90° counterclockwise from the first state, the electronic device 101 may display the screen 504 of the camera application in a state rotated 90° from the normal state. In an embodiment, in a third state where the electronic device 101 is rotated 90° counterclockwise from the second state, the electronic device 101 may display the screen 506 of the camera application in a state rotated 90° from the normal state. In an embodiment, in a fourth state where the electronic device 101 is rotated 90° counterclockwise from the third state, the electronic device 101 may display the screen 508 of the camera application in a state rotated 90° from the normal state.

In an embodiment, referring to the screens 502, 504, 506, and 508 in different states, a portion of image objects may be displayed at a fixed location regardless of rotation of the electronic device 101. For example, a navigation bar 510 may be displayed on a notch area 415 regardless of the rotation of the electronic device 101. However, it is not limited thereto.

In an embodiment, referring to the screens 502, 504, 506, and 508 in the different states, a portion of image objects 520, 530, 540, and 550 may be displayed at a location moved according to the rotation of the electronic device 101. For example, the image object 520 indicating a shooting mode may be displayed in an area adjacent to the ground of the screens 502, 504, 506, and 508 according to the rotation of the electronic device 101. For example, the image object 530 indicating a thumbnail of an image stored in a gallery may be displayed in a right area of the area in which the image object 520 is displayed on the screens 502, 504, 506, and 508 according to the rotation of the electronic device 101. For example, the image object 540 for a menu may be displayed in an area of an upper portion of a right portion of the screens 502, 504, 506, and 508 according to the rotation of the electronic device 101. However, it is not limited thereto.

For example, the image object 550 for the hint may be displayed in an area adjacent to the ground of the screens 502, 504, 506, and 508 according to the rotation of the electronic device 101. For example, in the first state, while the screen 502 is displayed, the image object 550 for the hint may be displayed in the notch area 415. For example, in the second state, the third state, or the fourth state, while one of the screens 504, 506, and 508 is displayed, the image object 550 for the hint may be displayed around a central portion of a side adjacent to the ground other than the notch area 415.

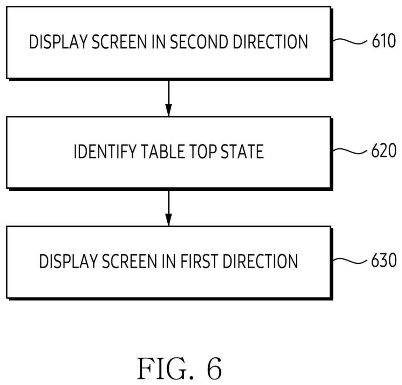

FIG. 6 is a flowchart indicating an operation performed by an electronic device 101, according to an embodiment.

FIG. 6 may be described with reference to FIGS. 1, 2A, 2B, 2C, 3A, 3B, 3C, 4A, 4B, 4C, and 5A.

Referring to FIG. 6, in an operation 610, a screen 301 may be displayed in a second direction. In an embodiment, the electronic device 101 may display the screen 301 in the second direction in another state other than a table top state. In an embodiment, the electronic device 101 may display the screen 301 on a second display 235 in the second direction, in response to being identified as a folded state 310 based on data obtained through a sensor module 176.

In an embodiment, in a folded state 311 where the electronic device 101 is perpendicular to ground and a hinge structure 260 faces in a direction opposite to the ground (or upward), the electronic device 101 may display the screen 301 in the second direction. In a folded state 315 where the electronic device 101 is perpendicular to the ground and the hinge structure 260 faces in the ground direction (or downward), the electronic device 101 may display the screen 301 in the second direction.

In an embodiment, when an angle between a first housing 210 and a second housing 220 in an intermediate state 320 is less than (e.g., less than 20°) a specified angle range, the electronic device 101 may display the screen 301 on the second display 235 in the second direction.

In an embodiment, in a case that the electronic device 101 is in the intermediate state 320 and a second surface 212 is not substantially horizontal to the ground, the electronic device 101 may display the screen 301 on the second display 235 in the second direction. For example, in a case that the electronic device 101 is in the intermediate state 320 and the second surface 212 is substantially perpendicular to the ground, the electronic device 101 may display the screen 301 on the second display 235 in the second direction in the intermediate state 320.

In an embodiment, in a case that a first surface 211 is closer to the ground than the second surface 212, the electronic device 101 may display the screen 301 on the second display 235 in the second direction.

In an operation 620, the electronic device 101 may identify the table top state.

In an embodiment, the electronic device 101 may identify a posture of the electronic device 101. For example, the electronic device 101 may obtain data indicating a degree of horizontality (or data based on a 6-axis sensor) of the electronic device 101 through a sensor module 176. For example, the electronic device 101 may identify the posture of the electronic device 101 based on the data indicating the degree of horizontality of the electronic device 101. For example, the electronic device 101 may obtain data indicating a degree of folding of the electronic device 101 through the sensor module 176. For example, the electronic device 101 may identify the posture of the electronic device 101 based on the data indicating the degree of folding of the electronic device 101.

In an embodiment, the electronic device 101 may identify the degree of folding of the electronic device 101 and/or the degree of horizontality of the electronic device 101, based on data related to the posture of the electronic device 101 through the sensor module 176. For example, the electronic device 101 may identify the table top state of the electronic device 101 based on the data obtained through the sensor module 176.

In an operation 630, the electronic device 101 may display a screen 302 in a first direction.

In an embodiment, the electronic device 101 may display the screen 302 on the second display 235 in the first direction in the table top state. In an embodiment, the electronic device 101 may display the screen 302 on the second display 235 in the first direction, in response to being identified as the table top state based on data.

As described above, by outputting a screen in a rotated state only in a specific posture, the electronic device 101 may provide an advantage that may allow a user to use the electronic device 101 in the intermediate state 320 after placing the electronic device 101 in the intermediate state 320 on a table. In addition, by outputting the screen in the rotated state only in the specific posture, inconvenience of the screen rotating against an intention of the user may be reduced, while the user uses the electronic device 101.

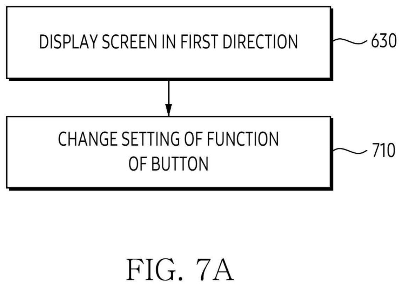

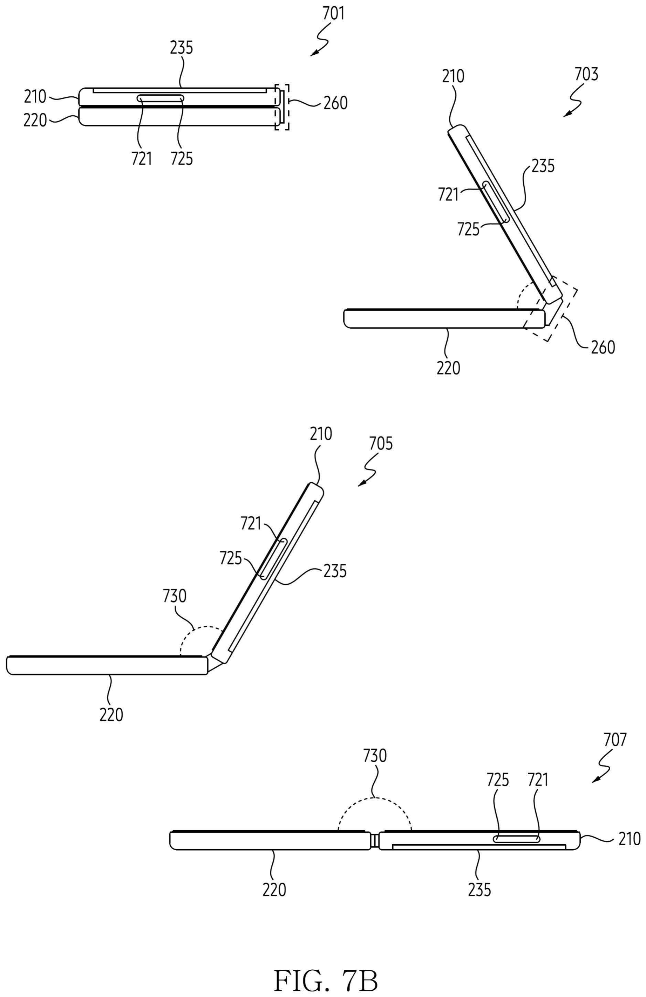

FIG. 7A is a flowchart indicating an operation performed by an electronic device, 101 according to an embodiment. FIG. 7B illustrates an example of a folded state, an intermediate state, and an unfolded state of an electronic device, according to an embodiment.

FIGS. 7A and 7B may be described with reference to FIGS. 1, 2A, 2B, 2C, 3A, 3B, 3C, 4A, 4B, 4C, and 5A.

An operation 630 of FIG. 7A may correspond to the operation 630 of FIG. 6.

Referring to FIG. 7A, in the operation 630, the electronic device 101 may display a screen in a first direction.

In an embodiment, the electronic device 101 may display a screen 302 on a second display 235 in the first direction in a table top state. In an embodiment, the electronic device 101 may display the screen 302 on the second display 235 in the first direction, in response to being identified as the table top state based on data.

In an operation 710, the electronic device 101 may change setting of a function of a button.

According to an embodiment, while displaying a screen on the second display 235 in the first direction, the electronic device 101 may change functions assigned to buttons. For example, while displaying the screen on the second display 235 in the first direction, the electronic device 101 may change functions assigned to at least two physical buttons located on a lateral surface (or a third surface 213) of the first housing 210 of the electronic device 101. For example, in the table top state, the electronic device 101 may change the functions assigned to the at least two physical buttons located on the lateral surface (or the third surface 213) of the first housing 210 of the electronic device 101.

For example, while the table top state is maintained, the electronic device 101 may assign a first function to a first button of the at least two physical buttons and a second function opposite to the first function to a second button of the at least two physical buttons. For example, the first button may be located farther from the hinge structure 260 than the second button. In an embodiment, in another state other than the table top state, the electronic device 101 may assign a volume-up function to the first button and a volume-down function opposite to the volume-up function to the second button. In an embodiment, in the table top state, the electronic device 101 may assign the volume-down function to the first button and the volume-up function to the second button. However, it is not limited thereto.

Referring to FIG. 7B, in a folded state 701 where a housing angle is substantially 0°, the second function (e.g., the volume-down function) may be assigned to a first button 721 and the first function (e.g., the volume-up function) may be assigned to a second button 725. In an embodiment, in a table top state 703 where a housing angle 730 is 20° to 80°, the first function (e.g., the volume-up function) may be assigned to the first button 721, and the second function (e.g., the volume-down function) may be assigned to the second button 725. In addition, in a flex mode state 705 where the housing angle 730 exceeds 80°, the first function (e.g., the volume-up function) may be assigned to the first button 721, and the second function (e.g., the volume-down function) may be assigned to the second button 725. Finally, in an unfolded state 707 where the housing angle 730 is substantially 180°, the first function (e.g., the volume-up function) may be assigned to the first button 721, and the second function (e.g., the volume-down function) may be assigned to the second button 725.

As described above, the electronic device 101 may help a user intuitively manipulate buttons by changing functions assigned to physical buttons each other while outputting a screen in a rotated state.

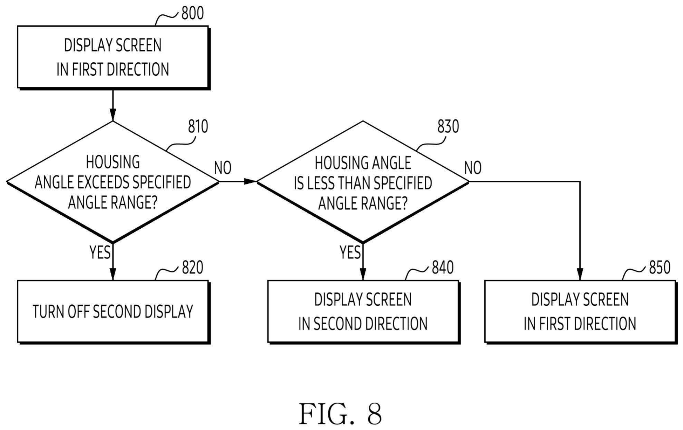

FIG. 8 is a flowchart indicating an operation performed by an electronic device 101, according to an embodiment.

FIG. 8 may be described with reference to FIGS. 1, 2A, 2B, 2C, 3A, 3B, 3C, 4A, 4B, 4C, and 5A.

An operation 630 of FIG. 8 may correspond to the operation 630 of FIG. 6.

Referring to FIG. 8, in the operation 630, the electronic device 101 may display a screen 301 in a first direction.

In an embodiment, the electronic device 101 may display a screen 302 on a second display 235 in the first direction in a table top state. In an embodiment, the electronic device 101 may display the screen 302 on the second display 235 in the first direction, in response to being identified as the table top state based on data.

In an operation 810, the electronic device 101 may identify whether a housing angle exceeds a specified angle range (e.g., 20° to 80°).

In an embodiment, the electronic device 101 may obtain data indicating a degree of folding of the electronic device 101 through a sensor module 176. In an embodiment, the electronic device 101 may identify the housing angle of the electronic device 101, based on the data indicating the degree of folding of the electronic device 101. In an embodiment, the electronic device 101 may identify whether the housing angle between a first housing 210 and a second housing 220 exceeds the specified angle range (e.g., 20° to 80°).

In the operation 810, in a case that the housing angle exceeds the specified angle range (e.g., 20° to 80°), the electronic device 101 may perform an operation 820. In the operation 810, in a case that the housing angle does not exceed the specified angle range (e.g., 20° to 80°), the electronic device 101 may perform an operation 830.

In the operation 820, the electronic device 101 may turn off the second display 235. The electronic device 101 may turn off the second display 235 and turn on a first display 230. In an embodiment, the electronic device 101 may display a screen on the first display 230 other than the second display 235.

In the operation 830, the electronic device 101 may identify whether the housing angle is less than the specified angle range (e.g., 20° to 80°). In an embodiment, the electronic device 101 may obtain the data indicating the degree of folding of the electronic device 101 through the sensor module 176. In an embodiment, the electronic device 101 may identify the housing angle of the electronic device 101, based on the data indicating the degree of folding of the electronic device 101. In an embodiment, the electronic device 101 may identify whether the housing angle between a first housing 210 and a second housing 220 is less than the specified angle range (e.g., 20° to 80°).

In the operation 830, in a case that the housing angle exceeds the specified angle range (e.g., 20° to 80°), the electronic device 101 may perform an operation 840. In the operation 830, in a case that the housing angle is not less than the specified angle range (e.g., 20° to 80°), the electronic device 101 may perform an operation 850.

In the operation 840, the electronic device 101 may display the screen 301 in a second direction. In an embodiment, the electronic device 101 may display the screen 302 on the second display 235 in the second direction in a state where the housing angle is less than the specified angle range. In an embodiment, the electronic device 101 may display the screen 302 on the second display 235 in the second direction, in response to identifying that the housing angle is less than the specified angle range.

In the operation 850, the electronic device 101 may display the screen 302 in the first direction. In an embodiment, the electronic device 101 may display the screen 302 on the second display 235 in the first direction in a state where the housing angle is within the specified angle range. In an embodiment, the electronic device 101 may display the screen 302 on the second display 235 in the first direction, in response to identifying that the housing angle is within the specified angle range.

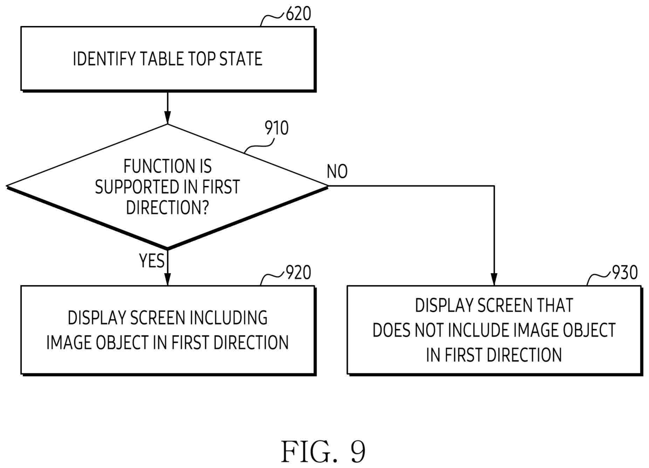

FIG. 9 is a flowchart indicating an operation performed by an electronic device 101, according to an embodiment.

FIG. 9 may be described with reference to FIGS. 1, 2A, 2B, 2C, 3A, 3B, 3C, 4A, 4B, 4C, and 5A.

An operation 620 of FIG. 9 may correspond to the operation 620 of FIG. 6. Operations 910, 920, and 930 of FIG. 9 may be included in the operation 630 of FIG. 6.

Referring to FIG. 9, in the operation 620, the electronic device 101 may identify a table top state.

In an embodiment, the electronic device 101 may identify a posture of the electronic device 101. For example, the electronic device 101 may obtain data indicating a degree of horizontality (or data based on a 6-axis sensor) of the electronic device 101 through a sensor module 176. For example, the electronic device 101 may identify the posture of the electronic device 101 based on the data indicating the degree of horizontality of the electronic device 101. For example, the electronic device 101 may obtain data indicating a degree of folding of the electronic device 101 through the sensor module 176. For example, the electronic device 101 may identify the posture of the electronic device 101, based on the data indicating the degree of folding of the electronic device 101.

In an embodiment, the electronic device 101 may identify the degree of folding of the electronic device 101 and/or the degree of horizontality of the electronic device 101, based on data related to the posture of the electronic device 101 through the sensor module 176. For example, the electronic device 101 may identify the table top state of the electronic device 101, based on the data obtained through the sensor module 176.

In an operation 910, the electronic device 101 may determine whether a function related to previously displayed image object 420, 440, or 450 is supported in a first direction. The electronic device 101 may determine whether the function related to the image object 420, 440, or 450 included in a screen displayed in a second direction is supported in the table top state.

For example, in a case that a function related to the image object 420 is set to be supported only in another state other than the table top state, the electronic device 101 may determine that the function related to the previously displayed image object 420 is not supported in the first direction.

For example, in a case that a function related to the image objects 440 or 450 is set to be supported even in the table top state, the electronic device 101 may determine that the function related to the previously displayed image object 440 or 450 is supported in the first direction.

In the operation 910, in a case that the function related to the image object 440 or 450 is supported in the first direction, the electronic device 101 may perform an operation 920. In the operation 910, in a case that the function related to the image object 420 is not supported in the first direction, the electronic device 101 may perform an operation 930.

In the operation 920, the electronic device 101 may display screens 404 and 406 including the image object 440 or 450 in the first direction. In an embodiment, the image object 440 may be a capsule or on going activity. In an embodiment, the image object 450 may be a navigation bar.

In the operation 930, the electronic device 101 may display a screen 402 that does not include the image object 420 in the first direction. For example, the image object 420 may be an object for notifying a user that a specified function (e.g., payment) may be performed through the image object 420.

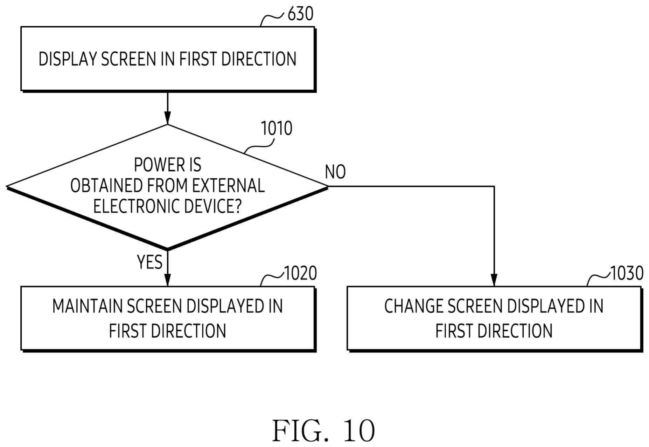

FIG. 10 is a flowchart indicating an operation performed by an electronic device 101, according to an embodiment.

FIG. 10 may be described with reference to FIGS. 1, 2A, 2B, 2C, 3A, 3B, 3C, 4A, 4B, 4C, and 5A.

An operation 630 of FIG. 10 corresponds to the operation 630 of FIG. 6.

Referring to FIG. 10, in the operation 630, the electronic device 101 may display a screen in a first direction.

In an embodiment, the electronic device 101 may display a screen 302 on a second display 235 in the first direction in a table top state. In an embodiment, the electronic device 101 may display the screen 302 on the second display 235 in the first direction, in response to being identified as the table top state based on data.

In an operation 1010, the electronic device 101 may identify whether power is obtained from an external electronic device 102. In an embodiment, the electronic device 101 may identify whether the power is obtained through a power management module 188. In an embodiment, the electronic device 101 may identify whether wired and/or wireless power from the external electronic device 102 is obtained through the power management module 188.

In the operation 1010, in a case that the power is obtained from the external electronic device 102, the electronic device 101 may perform an operation 1020. In the operation 1010, in a case that the power is not obtained from the external electronic device 102, the electronic device 101 may perform an operation 1030.

In the operation 1020, the electronic device 101 may maintain the screen 302 displayed in the first direction. For example, the electronic device 101 may maintain display of the screen 302 even after displaying the screen 302 on the second display 235 for a specified setting time (e.g., 30 seconds). Herein, the specified setting time may be time for switching to a low power mode (or always on display (AoD)).

In the operation 1030, the electronic device 101 may change the screen 302 displayed in the first direction. For example, the electronic device 101 may change the screen 302 to another screen after displaying the screen 302 on the second display 235 for the specified setting time. For example, the electronic device 101 may display a screen set according to the low power mode (or AoD) on the second display 235. Herein, the screen set according to the low power mode (or AoD) may include time information.

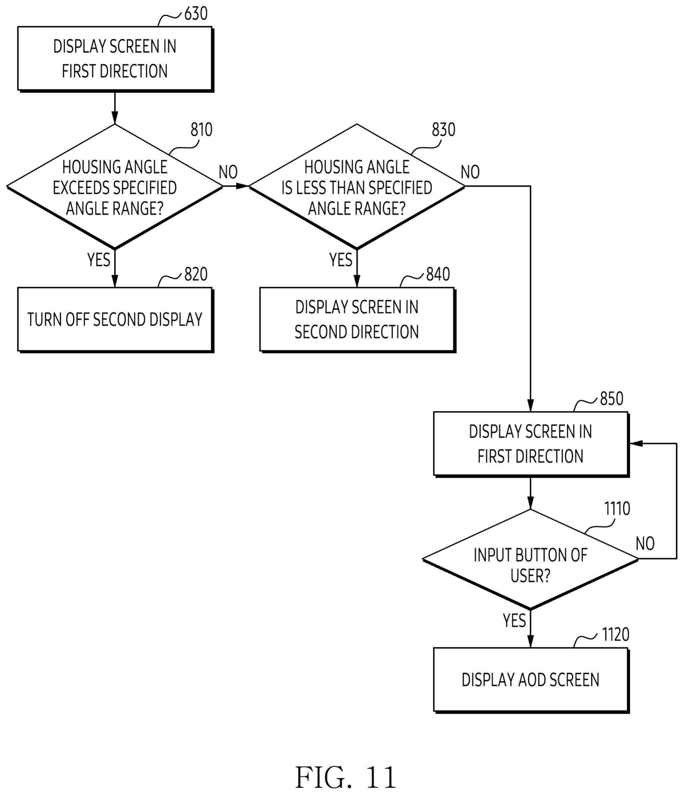

FIG. 11 is a flowchart indicating an operation performed by an electronic device, according to an embodiment.

FIG. 11 may be described with reference to FIGS. 1, 2A, 2B, 2C, 3A, 3B, 3C, 4A, 4B, 4C, 5A, 6 and 8.

An operation 630 of FIG. 11 may correspond to the operation 630 of FIG. 6. Operations 810, 820, 830, 840, and 850 of FIG. 11 may correspond to the operations 810, 820, 830, 840, and 850 of FIG. 8.

Referring to FIG. 11, in the operation 630, the electronic device 101 may display a screen 301 in a first direction.

In an embodiment, the electronic device 101 may display a screen 302 on a second display 235 in the first direction in a table top state. In an embodiment, the electronic device 101 may display the screen 302 on the second display 235 in the first direction, in response to being identified as the table top state based on data.

In the operation 810, the electronic device 101 may identify whether a housing angle exceeds a specified angle range (e.g., 20° to 80°).

In the operation 810, in a case that the housing angle exceeds the specified angle range (e.g., 20° to 80°), the electronic device 101 may perform the operation 820. In the operation 810, in a case that the housing angle does not exceed the specified angle range (e.g., 20° to 80°), the electronic device 101 may perform the operation 830.

In the operation 820, the electronic device 101 may turn off the second display 235. The electronic device 101 may turn off the second display 235 and turn on a first display 230. In an embodiment, the electronic device 101 may display a screen on the first display 230 other than the second display 235.

In the operation 830, the electronic device 101 may identify whether the housing angle is less than the specified angle range. In an embodiment, the electronic device 101 may obtain data indicating a degree of folding of the electronic device 101 through a sensor module 176. In an embodiment, the electronic device 101 may identify the housing angle of the electronic device 101, based on the data indicating the degree of folding of the electronic device 101. In an embodiment, the electronic device 101 may identify whether the housing angle between a first housing 210 and a second housing 220 is less than the specified angle range (e.g., 20° to 80°).

In the operation 830, in a case that the housing angle exceeds the specified angle range (e.g., 20° to 80°), the electronic device 101 may perform the operation 840. In the operation 830, in a case that the housing angle is not less than the specified angle range (e.g., 20° to 80°), the electronic device 101 may perform the operation 850.

In the operation 840, the electronic device 101 may display the screen 301 in a second direction. In an embodiment, the electronic device 101 may display the screen 302 on the second display 235 in the second direction in a state where the housing angle is less than the specified angle range. In an embodiment, the electronic device 101 may display the screen 302 on the second display 235 in the second direction, in response to identifying that the housing angle is less than the specified angle range.

In the operation 850, the electronic device 101 may display the screen 302 in the first direction. In an embodiment, the electronic device 101 may display the screen 302 on the second display 235 in the first direction in a state where the housing angle is within the specified angle range. In an embodiment, the electronic device 101 may display the screen 302 on the second display 235 in the first direction, in response to identifying that the housing angle is within the specified angle range.

In an operation 1110, the electronic device 101 may determine whether a button input of a user is identified. In an embodiment, while displaying a screen on the second display 235 in the first direction, the electronic device 101 may determine whether an input to at least one button among two physical buttons located on a lateral surface (or a third surface 213) of the first housing 210 is identified.

In an embodiment, the electronic device 101 may determine whether an input to a physical button including a fingerprint sensor among at least two physical buttons located on the lateral surface (or the third surface 213) of the first housing 210 is identified, while displaying the screen on the second display 235 in the first direction.

In the operation 1110, in a case that the button input of the user is identified, the electronic device 101 may perform an operation 1120. In the operation 1110, in a case that the button input of the user is not identified, the electronic device 101 may perform the operation 850 again.

In the operation 1120, the electronic device 101 may display an always on display (AoD) screen on the second display 235. In an embodiment, the electronic device 101 may switch the screen 302 displayed in the first direction to the AoD screen. In an embodiment, in a case that the button input of the user is identified, the electronic device 101 may display the AoD screen on the second display 235 by changing a setting related to AoD. In an embodiment, the setting related to the AoD may include tap to show, show always, show as scheduled, and show for new notifications.

In an embodiment, the tap-to-show may be a setting for displaying the AoD screen based on a tap input, in a state where the second display 235 is turned off. In an embodiment, the show always may be a setting for always displaying the AoD screen in the table top state (or in a folded state). In an embodiment, the show as scheduled may be a setting for displaying the AoD screen according to a specified schedule in a state where the second display 235 is turned off.

In an embodiment, in a case that the button input of the user is identified, the electronic device 101 may display the AoD screen on the second display 235 by changing the setting related to the AoD to the 'show always'.

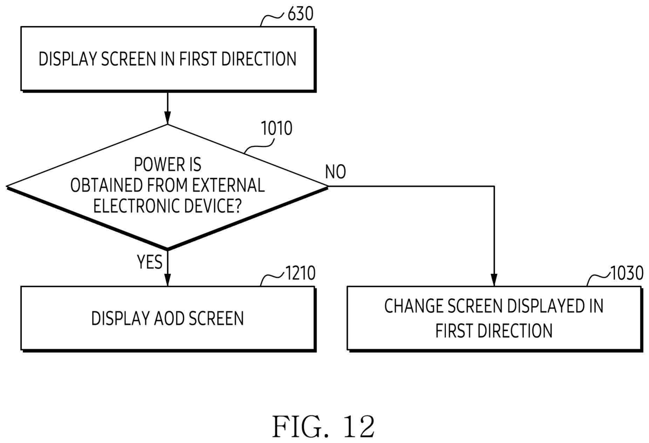

FIG. 12 is a flowchart indicating an operation performed by an electronic device 101, according to an embodiment.

FIG. 12 may be described with reference to FIGS. 1, 2A, 2B, 2C, 3A, 3B, 3C, 4A, 4B, 4C, 5A, 6, 8 and 10.

An operation 630 of FIG. 12 may correspond to the operation 630 of FIG. 6.

Referring to FIG. 12, in the operation 630, the electronic device 101 may display a screen in a first direction.

In an embodiment, the electronic device 101 may display a screen 302 on a second display 235 in the first direction in a table top state. In an embodiment, the electronic device 101 may display the screen 302 on the second display 235 in the first direction, in response to being identified as the table top state based on data.

In an operation 1210, the electronic device 101 may identify whether power is obtained from an external electronic device 102. In an embodiment, the electronic device 101 may identify whether the power is obtained through a power management module 188. In an embodiment, the electronic device 101 may identify whether wired and/or wireless power from the external electronic device 102 is obtained through the power management module 188.

In the operation 1010, in a case that the power is obtained from the external electronic device 102, the electronic device 101 may perform an operation 1220. In the operation 1210, in a case that the power is not obtained from the external electronic device 102, the electronic device 101 may perform an operation 1230.

In the operation 1210, the electronic device 101 may display an always on display (AoD) screen on the second display 235.

In the operation 1030, the electronic device 101 may change the screen 302 displayed in the first direction. For example, the electronic device 101 may change the screen 302 to another screen after displaying the screen 302 on the second display 235 for a specified setting time. For example, the electronic device 101 may display a screen set according to a low power mode (or AoD) on the second display 235. Herein, the screen set according to the low power mode (or AoD) may include time information.

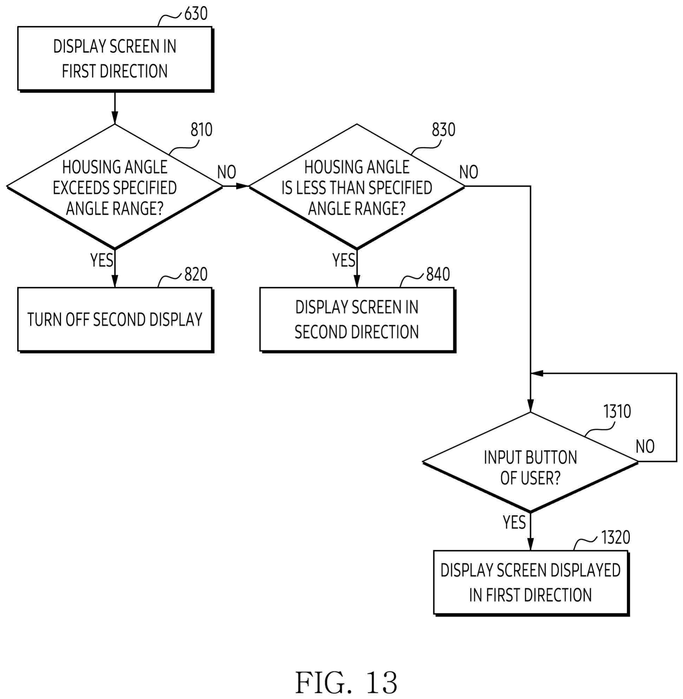

FIG. 13 is a flowchart indicating an operation performed by an electronic device, according to an embodiment.

FIG. 13 may be described with reference to FIGS. 1, 2A, 2B, 2C, 3A, 3B, 3C, 4A, 4B, 4C, 5A, 6, 8 and 11.

An operation 630 of FIG. 13 may correspond to the operation 630 of FIG. 6. Operations 810, 820, 830, and 840 of FIG. 13 may correspond to the operations 810, 820, 830, and 840 of FIG. 8.

Referring to FIG. 13, in the operation 630, the electronic device 101 may display a screen 301 in a first direction.

In an embodiment, the electronic device 101 may display a screen 302 on a second display 235 in the first direction in a table top state. In an embodiment, the electronic device 101 may display the screen 302 on the second display 235 in the first direction, in response to being identified as the table top state based on data.

In the operation 810, the electronic device 101 may identify whether a housing angle exceeds a specified angle range (e.g., 20° to 80°).

In the operation 810, in a case that the housing angle exceeds the specified angle range (e.g., 20° to 80°), the electronic device 101 may perform the operation 820. In the operation 810, in a case that the housing angle does not exceed the specified angle range (e.g., 20° to 80°), the electronic device 101 may perform the operation 830.

In the operation 820, the electronic device 101 may turn off the second display 235. The electronic device 101 may turn off the second display 235 and turn on a first display 230. In an embodiment, the electronic device 101 may display a screen on the first display 230 other than the second display 235.

In the operation 830, the electronic device 101 may identify whether the housing angle is less than the specified angle range. In an embodiment, the electronic device 101 may obtain data indicating a degree of folding of the electronic device 101 through a sensor module 176. In an embodiment, the electronic device 101 may identify the housing angle of the electronic device 101, based on the data indicating the degree of folding of the electronic device 101. In an embodiment, the electronic device 101 may identify whether the housing angle between a first housing 210 and a second housing 220 is less than the specified angle range (e.g., 20° to 80°).

In the operation 830, in a case that the housing angle exceeds the specified angle range (e.g., 20° to 80°), the electronic device 101 may perform the operation 840. In the operation 830, in a case that the housing angle is not less than the specified angle range (e.g., 20° to 80°), the electronic device 101 may perform an operation 1310.

In the operation 840, the electronic device 101 may display the screen 301 in a second direction. In an embodiment, the electronic device 101 may display the screen 302 on the second display 235 in the second direction in a state where the housing angle is less than the specified angle range. In an embodiment, the electronic device 101 may display the screen 302 on the second display 235 in the second direction, in response to identifying that the housing angle is less than the specified angle range.

In the operation 1310, the electronic device 101 may determine whether a button input of a user is identified. In an embodiment, while turning off the second display 235, the electronic device 101 may determine whether an input to at least one button among two physical buttons located on a lateral surface (or a third surface 213) of the first housing 210 is identified. In an embodiment, the second display 235 may be turned off after displaying the screen 302 for a specified setting time (e.g., 30 seconds).

In an embodiment, the electronic device 101 may determine whether an input to a physical button including a fingerprint sensor among at least two physical buttons located on the lateral surface (or the third surface 213) of the first housing 210 is identified, while turning off the second display 235.

In the operation 1310, in a case that the button input of the user is identified, the electronic device 101 may perform an operation 1320. In the operation 1310, in a case that the button input of the user is identified, the electronic device 101 may perform the operation 1310 again.

In the operation 1320, the electronic device 101 may display the screen 302 displayed in the first direction. For example, the electronic device 101 may display the screen 302 on the second display 235 for the specified setting time (e.g., 30 seconds). The electronic device 101 may turn off the second display 235 after displaying an AOD screen on the second display 235 for the specified setting time (e.g., 30 seconds).

As described above, an electronic device 101 may comprise a housing including a first housing part 210, and a second housing part 220 which is movably arranged between a folded status and an unfolded status with respect to the first housing part 210. The electronic device 101 may comprise a flexible display 230 of which at least a portion is bendable according to relative motion of the second housing part 220 with respect to the first housing part 210. The electronic device 101 may comprise a sub display 235 included on a second surface opposite to a first surface of the first housing part 210 on which the flexible display 230 is included. The electronic device 101 may comprise a sensor 176 for obtaining data indicating a degree of horizontality of the electronic device 101. The electronic device 101 may comprise at least one processor 120 comprising processing circuitry. The electronic device 101 may comprise memory 130 storing instructions. The instructions, when executed by the at least one processor 120 individually or collectively, may cause the electronic device 101 to identify a posture of the electronic device 101 as a table top state through the data. In an embodiment, the table top state may be a state where the second housing part 220 is closer to ground than the first housing part 210, the second housing part 220 is arranged to be relatively horizontal with respect to the ground, and an angle of the second housing part 220 with respect to the first housing part 210 is within a specified angle range. The instructions, when executed by the at least one processor 120 individually or collectively, may cause the electronic device 101 to, while the table top state is maintained, display a screen 302 in a first direction through the sub display 235. The instructions, when executed by the at least one processor 120 individually or collectively, may cause the electronic device 101 to, while the electronic device 101 has another state different from the table top state, display the screen 301 in a second direction opposite to the first direction through the sub display 235.

In an embodiment, the electronic device 101 may further comprise a first button and a second button located on a lateral surface of the first housing part 210 or the second housing part 220. The instructions, when executed by the at least one processor 120 individually or collectively, may cause the electronic device 101 to, while the table top state is maintained, assign a first function to the first button, and a second function opposite to the first function to the second button. The instructions, when executed by the at least one processor 120 individually or collectively, may cause the electronic device 101 to, while the electronic device 101 has the another state, assign the second function to the first button, and the first function to the second button.

The instructions, when executed by the at least one processor 120 individually or collectively, may cause the electronic device 101 to identify a change of the angle while the table top state is maintained. The instructions, when executed by the at least one processor 120 individually or collectively, may cause the electronic device 101 to, in response to that the angle exceeds an upper limit of the specified angle range, turn off the sub display 235.

In an embodiment, in the electronic device 101, the sub display 235 may include a display area 411 with a rectangular shape and a notch area 415 with a rectangular shape adjacent to a side of the display area 411. The instructions, when executed by the at least one processor 120 individually or collectively, may cause the electronic device 101 to, while the table top state is maintained, display the screen 302 only in the display area 411 among the display area 411 and the notch area 415 in the first direction.

The instructions, when executed by the at least one processor 120 individually or collectively, may cause the electronic device 101 to, while the table top state is maintained, output a specified color through the notch area 415 instead of displaying the screen 302 through the notch area 415.

The instructions, when executed by the at least one processor 120 individually or collectively, may cause the electronic device 101 to, while the table top state is maintained, output the specified color through a portion of a corner of the display area 411 such that the corner of the display area 411 adjacent to the notch area 415 appears as a rounded corner.

The instructions, when executed by the at least one processor 120 individually or collectively, may cause the electronic device 101 to, while the electronic device 101 has the another state, display the screen 302 in the second direction through both the display area 411 and the notch area 415.

The instructions, when executed by the at least one processor 120 individually or collectively, may cause the electronic device 101 to, while the electronic device 101 has the another state, display an image object 440 related to an application being executed in a background on the notch area 415. The instructions, when executed by the at least one processor 120 individually or collectively, may cause the electronic device 101 to, while the table top state is maintained, display the image object 440 to be located on a bottom left of the screen 302.

In an embodiment, in the electronic device 101, the sub display 235 may include a display area 411 with a rectangular shape and a notch area 415 with a rectangular shape adjacent to a side of the display are 411. The instructions, when executed by the at least one processor 120 individually or collectively, may cause the electronic device 101 to display a navigation bar including at least three navigation buttons through the flexible display 230. The instructions, when executed by the at least one processor 120 individually or collectively, may cause the electronic device 101 to display another navigation bar 450 including at least one navigation button of which the number is less than the number of the at least three navigation buttons on the notch area 415 of the sub display 235.

In an embodiment, in the electronic device 101, the sub display 235 may include a display area 411 with a rectangular shape and a notch area 415 with a rectangular shape adjacent to a side and a corner of the display area 411. The instructions, when executed by the at least one processor 120 individually or collectively, may cause the electronic device 101 to, while the electronic device 101 has the another state, display an image object 420 for a hint on the notch area 415. The instructions, when executed by the at least one processor 120 individually or collectively, may cause the electronic device 101 to, while the table top state is maintained, cease displaying the image object 420 for the hint.

The instructions, when executed by the at least one processor 120 individually or collectively, may cause the electronic device 101 to, while the electronic device 101 has the another state, change the screen 401 to another screen related to the image object 420, in response to a swipe input 431 in a specified direction from the image object 420 for the hint. The instructions, when executed by the at least one processor 120 individually or collectively, may cause the electronic device 101 to, while the table top state is maintained, change the screen 402 to the another screen in response to the swipe input 435 in the specified direction from a lower side of the screen 402.

The instructions, when executed by the at least one processor 120 individually or collectively, may cause the electronic device 101 to, while the table top state is maintained, identify whether power is obtained from an external electronic device 102. The instructions, when executed by the at least one processor 120 individually or collectively, may cause the electronic device 101 to, in response to identifying that the power is not obtained, change the screen to a low power screen after displaying the screen 302 in the first direction for a specified time period. The instructions, when executed by the at least one processor 120 individually or collectively, may cause the electronic device 101 to, in response to identifying that the power is obtained, display the screen 302 in the first direction beyond the specified time period.

As described above, a method may be executed by an electronic device 101 including a housing including a first housing part 210, and a second housing part 220 which is movably arranged between a folded status and an unfolded status with respect to the first housing part 210, a flexible display 230 of which at least a portion is bendable according to relative motion of the second housing part 220 with respect to the first housing part 210, a sub display 235 included on a second surface opposite to a first surface of the first housing part 210 on which the flexible display 230 is included, and a sensor 176 for obtaining data indicating a degree of horizontality of the electronic device 101. The method may comprise identifying a posture of the electronic device 101 as a table top state through the data. In an embodiment, the table top state may be a state where the second housing part 220 is closer to ground than the first housing part 210 and the second housing part 220 is arranged to be relatively horizontal with respect to the ground. The method may comprise, while the table top state is maintained and an angle of the second housing part 220 with respect to the first housing part 210 is within a specified angle range, displaying a screen in a first direction through the sub display 235. The method may comprise, while the electronic device 101 has another state different from the table top state, or the angle is outside the specified angle range, displaying the screen in a second direction opposite to the first direction through the sub display 235.

The electronic device 101 may further comprise a first button and a second button located on a lateral surface of the first housing part 210 or the second housing part 220. The method may comprise, while the table top state is maintained, assigning a first function to the first button, and a second function opposite to the first function to the second button. The method may comprise, while the electronic device 101 has the another state, assigning the second function to the first button, and the first function to the second button.

The method may comprise identifying a change of the angle while the table top state is maintained. The method may comprise, in response to that the angle exceeds an upper limit of the specified angle range, turning off the sub display 235.

The sub display 235 may include a display area 411 with a rectangular shape and a notch area 415 with a rectangular shape adjacent to a side of the display area 411. The method may comprise, while the table top state is maintained, displaying the screen only in the display area 411 among the display area 411 and the notch area 415 in the first direction.

The sub display 235 may include a display area 411 with a rectangular shape and a notch area 415 with a rectangular shape adjacent to a side of the display are 411. The method may comprise displaying a navigation bar 450 including at least three navigation buttons through the flexible display 230. The method may comprise displaying another navigation bar 450 including at least one navigation button of which the number is less than the number of the at least three navigation buttons on the notch area 415 of the sub display 235.

The sub display 235 may include a display area 411 with a rectangular shape and a notch area 415 with a rectangular shape adjacent to a side and a corner of the display area 411. The method may comprise, while the electronic device 101 has the another state, displaying an image object for a hint on the notch area 415. The method may comprise, while the table top state is maintained, ceasing displaying the image object for the hint.

The method may comprise, while the electronic device 101 has the another state, changing the screen to another screen related to the image object, in response to a swipe input in a specified direction from the image object for the hint. The method may comprise, while the table top state is maintained, changing the screen to the another screen, in response to the swipe input in the specified direction from a lower side of the screen.

As described above, a non-transitory computer readable storage medium may store a program including instructions. The instructions, when executed by a processor 120 of an electronic device 101 including a housing including a first housing part 210, and a second housing part 220 which is movably arranged between a folded status and an unfolded status with respect to the first housing part 210, a flexible display 230 of which at least a portion is bendable according to relative motion of the second housing part 220 with respect to the first housing part 210, a sub display 235 included on a second surface opposite to a first surface of the first housing part 210 on which the flexible display 230 is included, and a sensor 176 for obtaining data indicating a degree of horizontality of the electronic device 101, may cause the electronic device 101 to identify a posture of the electronic device 101 as a table top state through the data. The table top state may be a state where the second housing part 220 is closer to ground than the first housing part 210, the second housing part 220 is arranged to be relatively horizontal with respect to the ground. The instructions, when executed by the processor 120, may cause the electronic device 101 to, while the table top state is maintained and an angle of the second housing part 220 with respect to the first housing part 210 is within a specified angle range, display a screen in a first direction through the sub display 235. The instructions, when executed by the processor 120, may cause the electronic device 101 to, while the electronic device 101 has another state different from the table top state, or the angle is outside the specified angle range, display the screen in a second direction opposite to the first direction through the sub display 235.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a housing including a first housing part (210), and a second housing part (220) which is movably arranged between a folded status and an unfolded status with respect to the first housing part (210);
a flexible display (230) of which at least a portion is bendable according to relative motion of the second housing part (220) with respect to the first housing part (210);
a sub display (235) included on a second surface opposite to a first surface of the first housing part (210) on which the flexible display (230) is included;
a sensor (176) for obtaining data indicating a degree of horizontality of the electronic device (101);
at least one processor (120) comprising processing circuitry; and
memory (130) storing instructions,
wherein the instructions, when executed by the at least one processor (120) individually or collectively, cause the electronic device (101) to:
identify a posture of the electronic device (101) as a table top state through the data, the table top state is a state where the second housing part (220) is closer to ground than the first housing part (210), the second housing part (220) is arranged to be relatively horizontal with respect to the ground, and an angle of the second housing part (220) with respect to the first housing part (210) is within a specified angle range,
while the table top state is maintained, display a screen (302) in a first direction through the sub display (235), and
while the electronic device (101) has another state different from the table top state, display the screen (302) in a second direction opposite to the first direction through the sub display (235).

2. the electronic device (101) of claim 1, further comprising:
a first button and a second button located on a lateral surface of the first housing part (210) or the second housing part (220),
wherein the instructions, when executed by the at least one processor (120) individually or collectively, cause the electronic device (101) to:
while the table top state is maintained, assign a first function to the first button, and a second function opposite to the first function to the second button, and
while the electronic device (101) has the another state, assign the second function to the first button, and the first function to the second button.

3. the electronic device (101) of claim 1,
wherein the instructions, when executed by the at least one processor (120) individually or collectively, cause the electronic device (101) to:
identify a change of the angle while the table top state is maintained, and
in response to that the angle exceeds an upper limit of the specified angle range, turn off the sub display (235).

4. the electronic device (101) of claim 1,
wherein the sub display (235) includes a display area (411) with a rectangular shape and a notch area (415) with a rectangular shape adjacent to a side of the display area (411), and
wherein the instructions, when executed by the at least one processor (120) individually or collectively, cause the electronic device (101) to:
while the table top state is maintained, display the screen (302) only in the display area (411) among the display area (411) and the notch area (415) in the first direction.

5. the electronic device (101) of claim 4,
wherein the instructions, when executed by the at least one processor (120) individually or collectively, cause the electronic device (101) to:
while the table top state is maintained, output a specified color through the notch area (415) instead of displaying the screen (302) through the notch area (415).

6. the electronic device (101) of claim 5,
wherein the instructions, when executed by the at least one processor (120) individually or collectively, cause the electronic device (101) to:
while the table top state is maintained, output the specified color through a portion of a corner of the display area (411) such that the corner of the display area (411) adjacent to the notch area (415) appears as a rounded corner.

7. the electronic device (101) of claim 4,
wherein the instructions, when executed by the at least one processor (120) individually or collectively, cause the electronic device (101) to:
while the electronic device (101) has the another state, display the screen (302) in the second direction through both the display area (411) and the notch area (415).

8. the electronic device (101) of claim 4,
wherein the instructions, when executed by the at least one processor (120) individually or collectively, cause the electronic device (101) to:
while the electronic device (101) has the another state, display an image object related to an application being executed in a background on the notch area (415), and
while the table top state is maintained, display the image object to be located on a bottom left of the screen (302).

9. the electronic device (101) of claim 1,
wherein the sub display (235) includes a display area (411) with a rectangular shape and a notch area (415) with a rectangular shape adjacent to a side of the display area (411), and
wherein the instructions, when executed by the at least one processor (120) individually or collectively, cause the electronic device (101) to:
display a navigation bar including at least three navigation buttons through the flexible display (230), and
display another navigation bar including at least one navigation button of which the number is less than the number of the at least three navigation buttons on the notch area (415) of the sub display (235).

10. the electronic device (101) of claim 1,
wherein the sub display (235) includes a display area (411) with a rectangular shape and a notch area (415) with a rectangular shape adjacent to a side and a corner of the display area (411), and
wherein the instructions, when executed by the at least one processor (120) individually or collectively, cause the electronic device (101) to:
while the electronic device (101) has the another state, display an image object for a hint on the notch area (415), and
while the table top state is maintained, cease displaying the image object for the hint.

11. the electronic device (101) of claim 10,
wherein the instructions, when executed by the at least one processor (120) individually or collectively, cause the electronic device (101) to:
while the electronic device (101) has the another state, change the screen (401) to another screen related to the image object (420) for the hint, in response to a swipe input in a specified direction from the image object (420) for the hint, and
while the table top state is maintained, change the screen (402) to the another screen in response to the swipe input in the specified direction from a lower side of the screen (402).

12. the electronic device (101) of claim 1,
wherein the instructions, when executed by the at least one processor (120) individually or collectively, cause the electronic device (101) to:
while the table top state is maintained, identify whether power is obtained from an external electronic device (102),
in response to identifying that the power is not obtained, change the screen (302) to a low power screen after displaying the screen (302) in the first direction for a specified time period, and
in response to identifying that the power is obtained, display the screen (302) in the first direction beyond the specified time period.

13. A method performed in an electronic device (101) including a housing including a first housing part (210), and a second housing part (220) which is movably arranged between a folded status and an unfolded status with respect to the first housing part (210), a flexible display (230) of which at least a portion is bendable according to relative motion of the second housing part (220) with respect to the first housing part (210), a sub display (235) included on a second surface opposite to a first surface of the first housing part (210) on which the flexible display (230) is included, and a sensor (176) for obtaining data indicating a degree of horizontality of the electronic device (101), comprising:
identifying a posture of the electronic device (101) as a table top state through the data, the table top state is a state where the second housing part (220) is closer to ground than the first housing part (210) and the second housing part (220) is arranged to be relatively horizontal with respect to the ground,
while the table top state is maintained and an angle of the second housing part (220) with respect to the first housing part (210) is within a specified angle range, displaying a screen in a first direction through the sub display (235), and
while the electronic device (101) has another state different from the table top state, or the angle is outside the specified angle range, displaying the screen in a second direction opposite to the first direction through the sub display (235).

14. the method of claim 13,
wherein the electronic device (101) further comprises a first button and a second button located on a lateral surface of the first housing part (210) or the second housing part (220),
wherein the method comprises:
while the table top state is maintained, assigning a first function to the first button, and a second function opposite to the first function to the second button, and
while the electronic device (101) has the another state, assigning the second function to the first button, and the first function to the second button.

15. A non-transitory computer readable storage medium storing a program including instructions,
wherein the instructions are configured, when executed by a processor (120) of an electronic device (101) including a housing including a first housing part (210), and a second housing part (220) which is movably arranged between a folded status and an unfolded status with respect to the first housing part (210), a flexible display (230) of which at least a portion is bendable according to relative motion of the second housing part (220) with respect to the first housing part (210), a sub display (235) included on a second surface opposite to a first surface of the first housing part (210) on which the flexible display (230) is included, and a sensor (176) for obtaining data indicating a degree of horizontality of the electronic device (101), to cause the electronic device (101) to:
identify a posture of the electronic device (101) as a table top state through the data, the table top state is a state where the second housing part (220) is closer to ground than the first housing part (210), the second housing part (220) is arranged to be relatively horizontal with respect to the ground, ,
while the table top state is maintained and an angle of the second housing part (220) with respect to the first housing part (210) is within a specified angle range, display a screen in a first direction through the sub display (235), and
while the electronic device (101) has another state different from the table top state, or the angle is outside the specified angle range, display the screen in a second direction opposite to the first direction through the sub display (235).
